# EUROPEAN PATENT APPLICATION

(11) **EP 4 546 127 A1**
(43) Date of publication of application: **30.04.2025**
(21) Application number: 23879000.0
(22) Date of filing: 11.10.2023
(51) Int. Cl.: G06F 9/451

(54) **INTERFACE GENERATION METHOD AND ELECTRONIC DEVICE**

(30) Priority: 18.10.2022 CN 202211275274
(71) Applicant: Huawei Technologies Co., Ltd., Shenzhen, Guangdong 518129 (CN)
(72) Inventor: LI, Yu, Shenzhen, Guangdong 518129 (CN); LIAO, Heng, Shenzhen, Guangdong 518129 (CN); LI, Yi, Shenzhen, Guangdong 518129 (CN); CHEN, Jian, Shenzhen, Guangdong 518129 (CN); WANG, Liang, Shenzhen, Guangdong 518129 (CN)
(74) Representative: Pfenning, Meinig & Partner mbB
(86) International application number: PCT/CN2023/123965
(87) International publication number: WO 2024/083009

(57) **Abstract**

This application discloses an interface generation method and an electronic device, and relates to the field of electronic technologies. The interface generation method provided in this application includes: in a process in which the electronic device displays an animation by using an application, in consideration of interface continuity in the animation process, generating an extended bitmap before the animation starts; when an N^{th} frame of interface of the animation needs to be displayed, capturing a first area in the extended bitmap for being sent for display; and when an M^{th} frame of interface needs to be displayed, capturing a second area in the extended bitmap for being sent for display. In this way, in the animation process, quantities of times of layout, measurement, and drawing and recording performed by the electronic device on a view by using a UI thread of the application can be reduced, and overheads of calling, by a render thread, a GPU to generate a bitmap for being sent for display can be reduced, to improve an energy efficiency ratio of interface generation. The interface continuity means that a plurality of frames of interfaces in the animation process have same display content.

## Description

This application claims priority to Chinese Patent Application No. 202211275274.2, filed with the China National Intellectual Property Administration on October 18, 2022 and entitled "INTERFACE GENERATION METHOD AND ELECTRONIC DEVICE", which is incorporated herein by reference in its entirety.

### TECHNICAL FIELD

This application relates to the technical field, and in particular, to an interface generation method and an electronic device.

### BACKGROUND

With development of technologies, resolution and a refresh rate of a screen of an electronic device are increasingly high. The resolution of the screen affects pixels included in one frame of interface, and the refresh rate affects time for generating one frame of interface.

Before the electronic device displays a 1^{st} frame of interface, the electronic device needs to spend a computing resource to generate the 1^{st} frame of interface. Before the electronic device displays a 2^{nd} frame of interface, the electronic device needs to spend a computing resource again to generate the 2^{nd} frame of interface.

When the electronic device does not generate the 2^{nd} frame of interface in time, content displayed on the screen of the electronic device may be frozen. To ensure that the electronic device can generate the 2^{nd} frame of interface in time, an operating frequency of a CPU is usually increased, to improve a computing capability of the electronic device. Consequently, energy consumption for generating a frame of interface by the electronic device is high, and an energy efficiency ratio of interface generation is reduced.

### SUMMARY

This application discloses an interface generation method and an electronic device, and relates to the field of electronic technologies. To improve an energy efficiency ratio of generating an interface by an electronic device in an animation process, embodiments of this application provide an interface generation method and an electronic device. According to the interface generation method provided in embodiments of this application, an extended bitmap is generated in advance, and a plurality of frames of interfaces in the animation process is generated by performing operations such as capturing and/or splicing. In the animation process, the electronic device does not need to traverse a view and generate a bitmap for a plurality of times.

According to a first aspect, embodiments of this application provide an interface generation method, applied to an electronic device, where a first application runs on the electronic device, and the method includes: The electronic device generates a first bitmap by using the first application after receiving a first operation, where the first bitmap includes display data corresponding to at least two frames of interfaces of the first application in a first animation, and the first operation is used to trigger the electronic device to display the first animation by using the first application; the electronic device obtains the at least two frames of interfaces of the first animation through capturing performed on the first bitmap; and the electronic device displays the first animation.

In the foregoing embodiments, because an interface continuously changes in an animation process, same display content definitely exists in a continuous change process of the interface. Based on this, a bitmap including display data of a plurality of frames of interfaces, for example, the first bitmap, is generated in advance based on continuity of the interface in an animation. In a subsequent interface generation process, only the first bitmap needs to be cropped and/or spliced, and the electronic device does not need to perform operations such as view traversal and bitmap generation by using a UI thread and a render thread, so that load of the application is reduced and an energy efficiency ratio of interface generation is improved.

With reference to some embodiments of the first aspect, in some embodiments, the first animation is a sliding animation; and that the electronic device generates the first bitmap by using the first application after receiving the first operation specifically includes: after the electronic device receives the first operation and determines that the first animation is the sliding animation, the electronic device modifies a size of a window of the first application, so that the size of the window of the first application changes from a first size to a second size, where the second size is greater than the first size; and the application generates the first bitmap based on the second size.

In the foregoing embodiments, when the animation is the sliding animation, a manner of generating the first bitmap is to modify the size of the window of the application, where a modified size is greater than the unmodified size. The window of the application becomes larger, and therefore, more content can be displayed, where the more content is content required by the first bitmap.

With reference to some embodiments of the first aspect, in some embodiments, the view related to the first animation includes a list view; when the size of the window of the first application is the first size, the list view includes a first list entry, and when the size of the window of the first application is the second size, the list view includes the first list entry and a second list entry; and on an M^{th} frame of interface of the first animation, the first list entry is displayed and the second list entry is not displayed, and on an N^{th} frame of interface of the first animation effect, the second list entry is displayed and the first list entry is not displayed, where M is not equal to N, and the M^{th} frame of interface and the N^{th} frame of interface belong to the at least two frames of interfaces.

In the foregoing embodiments, when an interface of the first application includes the list view and the list view changes in the sliding animation, before the size of the window of the application is modified, the list view includes the first list entry but does not include the second list entry due to a limitation of a size of the list view; and after the size of the window of the application is changed, the size of the list view changes accordingly, and the list view includes the second list entry and the first list entry. Then, in an animation display process, when it is determined, based on animation logic, that the second list entry needs to be displayed, the second list entry only needs to be captured from the first bitmap for being sent for display.

With reference to some embodiments of the first aspect, in some embodiments, the first animation is a sliding animation; and that the electronic device generates the first bitmap by using the first application after receiving the first operation specifically includes: The application modifies a size of a first view, where the first view is a view whose display content in the first animation changes, and a modified size of the first view is greater than the unmodified size of the first view; and the application generates the first bitmap based on the modified first view.

In the foregoing embodiments, when the animation is the sliding animation, a manner of generating the first bitmap is to modify a size of a view related to the sliding animation. After the size of the view is modified, the view includes content that needs to be displayed in the view on a plurality of frames of interfaces, to generate the first bitmap.

With reference to some embodiments of the first aspect, in some embodiments, the first view is a list view; before the first view is modified, the first view includes a first list entry, and after the first view is modified, the first view includes the first list entry and a second list entry; and on an M^{th} frame of interface of the first animation effect, the first list entry is displayed and the second list entry is not displayed, and on an N^{th} frame of interface of the first animation effect, the second list entry is displayed and the first list entry is not displayed, where M is not equal to N, and the M^{th} frame of interface and the N^{th} frame of interface belong to the at least two frames of interfaces.

In the foregoing embodiments, the list view includes the first list entry but does not include the second list entry due to a limitation of a size of the list view; when the size of the list view is modified, the list view may include more list entries, for example, the second list entry; and in the animation display process, when it is determined, based on animation logic, that the second list entry needs to be displayed, the second list entry only needs to be captured from the first bitmap for being sent for display.

With reference to some embodiments of the first aspect, in some embodiments, that the first bitmap is generated by using the application specifically includes: The application extends a first view, where the first view is a view whose display content changes within duration of the first animation effect, and one or more sub-views are added to the extended first view; and the application generates the first bitmap based on the extended first view

In the foregoing embodiments, a manner of generating the first bitmap is to add a sub-view to a view related to the animation, where display content corresponding to the sub-view is content that is not displayed on an interface other than a current frame in the animation process, for example, content displayed on a next frame of interface.

With reference to some embodiments of the first aspect, in some embodiments, before the first bitmap is generated by using the first application, and after the electronic device receives the first operation, the method further includes: The electronic device determines a dynamic area of an interface of the first animation by using the first application, where the first bitmap includes display data corresponding to a dynamic area of the at least two frames of interfaces of the first animation; and that the electronic device obtains the at least two frames of interfaces of the first animation through capturing performed on the first bitmap specifically includes: The electronic device captures a second bitmap from the first bitmap, where the second bitmap includes display data of a dynamic area on a first interface, and the first interface belongs to the at least two frames of interfaces of the first animation; and the electronic device generates the first interface based on the second bitmap.

In the foregoing embodiments, a dynamic area and a static area may be obtained through division, where the dynamic area is an area in which display content changes, and the dynamic area may be the same as or different from a dirty area. After the dynamic area is obtained through division, the first bitmap needs to include at least display data of the dynamic area on the plurality of frames of interfaces in the animation process, so that splicing and/or capturing are/is performed on the first bitmap to generate the plurality of frames of interfaces in the animation process.

With reference to some embodiments of the first aspect, in some embodiments, the method further includes: The electronic device generates a third bitmap by using the first application, where the third bitmap is a static area in the first animation, and the static area is an area in which display content on an interface of the first application in the first animation does not change; and that the electronic device generates the first interface based on the second bitmap specifically includes: The electronic device generates the first interface based on the second bitmap and the third bitmap.

In the foregoing embodiments, after the dynamic area and the static area are obtained through division, in the process of cropping and/or splicing, the static area and the dynamic area on the current frame of interface need to be spliced together, to generate one frame of interface in the animation process.

With reference to some embodiments of the first aspect, in some embodiments, the first bitmap further includes display data of a static area in the first animation, and the static area is an area in which display content on an interface of the first application in the first animation does not change.

In the foregoing embodiments, the static area may be in the first bitmap, or may not be in the first bitmap, but is obtained from another place, for example, captured from a previous frame of interface.

With reference to some embodiments of the first aspect, in some embodiments, that the electronic device obtains the at least two frames of interfaces of the first animation through capturing performed on the first bitmap specifically includes: In a process of generating an I^{th} frame of interface of the first animation, the electronic device captures a second bitmap from the first bitmap, where the second bitmap is display data of a first area in the first bitmap, the I^{th} frame of interface includes display content corresponding to the second bitmap, I is an integer greater than or equal to 1, and the I^{th} frame of interface belongs to the at least two frames of interfaces of the first animation; and in a process of generating a J^{th} frame of interface of the first animation, the electronic device captures a third bitmap from the first bitmap, where the third bitmap is display data of a second area in the first bitmap, the J^{th} frame of interface includes display content corresponding to the third bitmap, J is an integer greater than or equal to 1, J is not equal to I, the J^{th} frame of interface belongs to the at least two frames of interfaces of the first animation, and the second area is different from the first area.

In the foregoing embodiments, display content of different interfaces in the animation process is different. Therefore, capturing needs to be performed on different areas in the extended bitmap, to obtain display data used to generate the different interfaces in the animation process.

With reference to some embodiments of the first aspect, in some embodiments, the method further includes: In the process of generating the J^{th} frame of interface of the first animation, the electronic device captures a fourth bitmap from the first bitmap, where the fourth bitmap is display data of a third area in the first bitmap; the electronic device splices the fourth bitmap and the third bitmap to generate a fifth bitmap, where the fifth bitmap corresponds to the J^{th} frame of interface; and the electronic device displays the J^{th} frame of interface of the first animation based on the fifth bitmap.

In the foregoing embodiments, one frame of interface in the animation process may be obtained by splicing display content in a plurality of different areas in the first bitmap.

With reference to some embodiments of the first aspect, in some embodiments, after the first bitmap is generated by using the first application, and before the electronic device captures display content in the first area from the first bitmap to obtain the second bitmap, the method further includes: The electronic device obtains, by using an application server, content carried on a view in the first area in the first bitmap, where the content carried on the view is a text, an image, and/or a video.

In the foregoing embodiments, because the first bitmap includes display content of a next frame of interface to be displayed in the animation process, and display content of another frame of interface in the animation process, content carried on all views may not be loaded when the first bitmap is generated. Further, to reduce load of generating the first bitmap, content carried on all the views is not loaded, to improve a speed of generating the first bitmap.

With reference to some embodiments of the first aspect, in some embodiments, the first bitmap is used to generate a 1^{st} frame of interface to a K^{th} frame of interface of the first animation, and K is an integer greater than 1; and after the application generates the first bitmap, and before the electronic device displays the K^{th} frame of interface, the method further includes: The application generates a sixth bitmap, where the sixth bitmap is used to generate a (K+1)^{th} frame of interface to an L^{th} frame of interface of the first animation, and L is an integer greater than (K+1).

In the foregoing embodiments, the sixth bitmap is the 2^{nd} extended bitmap, that is, the interface in the animation process may be displayed by using a plurality of extended bitmaps. In this way, a size of the first bitmap can be reduced, and load of generating the first bitmap can be reduced; and the animation may be interrupted by another operation of the user, and extended bitmaps of all interfaces in the corresponding animation process may not be generated.

With reference to some embodiments of the first aspect, in some embodiments, the first operation is a sliding operation.

According to a second aspect, embodiments of this application provide an interface generation method, where the method is applied to an electronic device, and the method includes: A UI thread of an application generates a first render tree after receiving a trigger event of a sliding animation and after receiving a vertical synchronizing signal, where the first render tree includes a drawing instruction used to generate a plurality of frames of images in a first animation; a first process or a render thread of the application generates a first bitmap based on the first render tree after receiving the first render tree, where the first process is different from a process of the application; the first process or the render thread of the application captures a first area in the first bitmap to obtain a 1^{st} frame of image in a first animation process; the 1^{st} frame of image in the first animation process is displayed; the first process or the render thread of the application captures a second area in the first bitmap to obtain a 2^{nd} frame of image in the first animation process, where the second area is different from the first area; and the 2^{nd} frame of image in the first animation process is displayed.

In the foregoing embodiments, after determining that an animation needs to be displayed, the electronic device generates an extended bitmap, and different areas in the extended bitmap are captured to display different interfaces, so that quantities of times that the UI thread of the application performs traversal view and the render thread performs rendering can be reduced, to improve an energy efficiency ratio of an interface.

With reference to some embodiments of the second aspect, in some embodiments, that the UI thread of the application generates the first render tree specifically includes: The UI thread of the application determines that the animation is the sliding animation; and the UI thread of the application modifies a property of a view and/or a view hierarchy of the view based on the sliding animation, so that display content corresponding to the modified view includes display content corresponding to the view of the 1^{st} frame of interface and the view of the 2^{nd} frame of interface in a display process of the sliding animation; and the UI thread of the application generates the first render tree after executing measurement method invocation, layout method invocation, and drawing and recording method invocation.

In the foregoing embodiments, the extended bitmap may be generated in a plurality of manners. For example, the property of the view and/or the view hierarchy of the view are/is modified, to generate the first render tree, where the first render tree is content corresponding to the extended bitmap.

With reference to some embodiments of the second aspect, in some embodiments, after the first process or the render thread of the application captures a partial area in the first bitmap to obtain a second bitmap, and before the first process or the render thread of the application captures a partial area in the first bitmap to obtain a third bitmap, the method further includes: The application loads display content in the first area in the first bitmap from an application server, where the display content in the first area is a text, a video, or an image, the first area is located in the third bitmap, and the first area is not located in the second bitmap.

In the foregoing embodiments, the electronic device may load only content carried on a view in a display area that needs to be displayed, to reduce a delay of generating the extended bitmap.

According to a third aspect, embodiments of this application provide an electronic device, where the electronic device includes one or more processors and a memory, the memory is coupled to the one or more processors, the memory is configured to store computer program code, the computer program code includes computer instructions, and the one or more processors call the computer instructions to enable the electronic device to perform the following content: The electronic device generates a first bitmap by using the first application after receiving a first operation, where the first bitmap includes display data corresponding to at least two frames of interfaces of the first application in a first animation, and the first operation is used to trigger the electronic device to display the first animation by using the first application; the electronic device obtains the at least two frames of interfaces of the first animation through capturing performed on the first bitmap; and the electronic device displays the first animation.

With reference to some embodiments of the third aspect, in some embodiments, the one or more processors are specifically configured to call the computer instructions to enable the electronic device to perform the following content: The first animation is a sliding animation; after the electronic device receives the first operation and determines that the first animation is the sliding animation, the electronic device modifies a size of a window of the first application, so that the size of the window of the first application changes from a first size to a second size, where the second size is greater than the first size; and the application generates the first bitmap based on the second size.

With reference to some embodiments of the third aspect, in some embodiments, the view related to the first animation includes a list view; when the size of the window of the first application is the first size, the list view includes a first list entry, and when the size of the window of the first application is the second size, the list view includes the first list entry and a second list entry; and on an M^{th} frame of interface of the first animation, the first list entry is displayed and the second list entry is not displayed, and on an N^{th} frame of interface of the first animation effect, the second list entry is displayed and the first list entry is not displayed, where M is not equal to N, and the M^{th} frame of interface and the N^{th} frame of interface belong to the at least two frames of interfaces.

With reference to some embodiments of the third aspect, in some embodiments, the one or more processors are specifically configured to call the computer instructions to enable the electronic device to perform the following content: The first animation is a sliding animation; the application modifies a size of a first view, where the first view is a view whose display content in the first animation changes, and a modified size of the first view is greater than the unmodified size of the first view; and the application generates the first bitmap based on the modified first view.

With reference to some embodiments of the third aspect, in some embodiments, the first view is a list view; before the first view is modified, the first view includes a first list entry, and after the first view is modified, the first view includes the first list entry and a second list entry; and on an M^{th} frame of interface of the first animation effect, the first list entry is displayed and the second list entry is not displayed, and on an N^{th} frame of interface of the first animation effect, the second list entry is displayed and the first list entry is not displayed, where M is not equal to N, and the M^{th} frame of interface and the N^{th} frame of interface belong to the at least two frames of interfaces.

With reference to some embodiments of the third aspect, in some embodiments, the one or more processors are specifically configured to call the computer instructions to enable the electronic device to perform the following content: The application extends a first view, where the first view is a view whose display content changes within duration of the first animation effect, and one or more sub-views are added to the extended first view; and the application generates the first bitmap based on the extended first view

With reference to some embodiments of the third aspect, in some embodiments, the one or more processors are specifically configured to call the computer instruction to enable the electronic device to perform the following content: The electronic device determines a dynamic area of an interface of the first animation by using the first application, and the first bitmap includes display data corresponding to a dynamic area of the at least two frames of interfaces of the first animation; and the one or more processors are further configured to call the computer instructions to enable the electronic device to perform the following content: The electronic device captures a second bitmap from the first bitmap, where the second bitmap includes display data of a dynamic area on a first interface, and the first interface belongs to the at least two frames of interfaces of the first animation; and the electronic device generates the first interface based on the second bitmap.

With reference to some embodiments of the third aspect, in some embodiments, the one or more processors are further configured to call the computer instructions to enable the electronic device to perform the following content: The electronic device generates a third bitmap by using the first application, where the third bitmap is a static area in the first animation, and the static area is an area in which display content on an interface of the first application in the first animation does not change; and the one or more processors are specifically configured to call the computer instructions to enable the electronic device to perform the following content: The electronic device generates the first interface based on the second bitmap and the third bitmap.

With reference to some embodiments of the third aspect, in some embodiments, the first bitmap further includes display data of a static area in the first animation, and the static area is an area in which display content on an interface of the first application in the first animation does not change.

With reference to some embodiments of the third aspect, in some embodiments, the one or more processors are specifically configured to call the computer instructions to enable the electronic device to perform the following content: In a process of generating an I^{th} frame of interface of the first animation, the electronic device captures a second bitmap from the first bitmap, where the second bitmap is display data of a first area in the first bitmap, the I^{th} frame of interface includes display content corresponding to the second bitmap, I is an integer greater than or equal to 1, and the I^{th} frame of interface belongs to the at least two frames of interfaces of the first animation; and in a process of generating a J^{th} frame of interface of the first animation, the electronic device captures a third bitmap from the first bitmap, where the third bitmap is display data of a second area in the first bitmap, the J^{th} frame of interface includes display content corresponding to the third bitmap, J is an integer greater than or equal to 1, J is not equal to I, the J^{th} frame of interface belongs to the at least two frames of interfaces of the first animation, and the second area is different from the first area.

With reference to some embodiments of the third aspect, in some embodiments, the one or more processors are further configured to call the computer instructions to enable the electronic device to perform the following content: In the process of generating the J^{th} frame of interface of the first animation, the electronic device captures a fourth bitmap from the first bitmap, where the fourth bitmap is display data of a third area in the first bitmap; the electronic device splices the fourth bitmap and the third bitmap to generate a fifth bitmap, where the fifth bitmap corresponds to the J^{th} frame of interface; and the electronic device displays the J^{th} frame of interface of the first animation based on the fifth bitmap.

With reference to some embodiments of the third aspect, in some embodiments, the one or more processors are further configured to call the computer instructions to enable the electronic device to perform the following content: The electronic device obtains, by using an application server, content carried on a view in the first area in the first bitmap, where the content carried on the view is a text, an image, and/or a video.

With reference to some embodiments of the third aspect, in some embodiments, the one or more processors are further configured to call the computer instructions to enable the electronic device to perform the following content: The first bitmap is used to generate a 1^{st} frame of interface to a K^{th} frame of interface of the first animation, and K is an integer greater than 1; and the application generates a sixth bitmap, where the sixth bitmap is used to generate a (K+1)^{th} frame of interface to an L^{th} frame of interface of the first animation, and L is an integer greater than (K+1).

With reference to some embodiments of the third aspect, in some embodiments, the first operation is a sliding operation.

According to a fourth aspect, embodiments of this application provide an electronic device, where the electronic device includes one or more processors and a memory, the memory is coupled to the one or more processors, the memory is configured to store computer program code, the computer program code includes computer instructions, and the one or more processors call the computer instructions to enable the electronic device to perform the following content: A UI thread of an application generates a first render tree after receiving a trigger event of a sliding animation and after receiving a vertical synchronizing signal, where the first render tree includes a drawing instruction used to generate a plurality of frames of images in a first animation; a first process or a render thread of the application generates a first bitmap based on the first render tree after receiving the first render tree, where the first process is different from a process of the application; the first process or the render thread of the application captures a first area in the first bitmap to obtain a 1^{st} frame of image in a first animation process; the 1^{st} frame of image in the first animation process is displayed; the first process or the render thread of the application captures a second area in the first bitmap to obtain a 2^{nd} frame of image in the first animation process, where the second area is different from the first area; and the 2^{nd} frame of image in the first animation process is displayed.

With reference to some embodiments of the fourth aspect, in some embodiments, the one or more processors are specifically configured to call the computer instructions to enable the electronic device to perform the following content: A UI thread of the application modifies a property of a view and/or a view hierarchy of the view based on the sliding animation, so that display content corresponding to the modified view includes display content corresponding to a view on the 1^{st} frame of interface and a view on the 2^{nd} frame of interface in a display process of the sliding animation; and the UI thread of the application generates the first render tree after executing measurement method invocation, layout method invocation, and drawing and recording method invocation.

With reference to some embodiments of the fourth aspect, in some embodiments, the one or more processors are further configured to call the computer instruction to enable the electronic device to perform the following content: The application loads display content in the first area in the first bitmap from an application server, where the display content in the first area is a text, a video, or an image, the first area is located in a third bitmap, and the first area is not located in a second bitmap.

According to a fifth aspect, embodiments of this application provide a chip system, where the chip system is used for an electronic device, the chip system includes one or more processors, and the processor is configured to call computer instructions to enable the electronic device to perform the method according to any one of the first aspect, the second aspect, the possible implementations of the first aspect, and the possible implementations of the second aspect.

According to a sixth aspect, embodiments of this application provide a computer program product including instructions, where when the computer program product runs on an electronic device, the electronic device is enabled to perform the method described in any one of the first aspect, the second aspect, the possible implementations of the first aspect, and the possible implementations of the second aspect.

According to a seventh aspect, embodiments of this application provide a computer-readable storage medium, including instructions, where when the instructions are run on an electronic device, the electronic device is enabled to perform the method described in any one of the first aspect, the second aspect, the possible implementations of the first aspect, and the possible implementations of the second aspect.

It may be understood that the electronic device provided in the third aspect or the fourth aspect, the chip system provided in the fifth aspect, the computer program product provided in the sixth aspect, and the computer storage medium provided in the seventh aspect are all configured to perform the method provided in embodiments of this application. Therefore, for beneficial effect that can be achieved, refer to beneficial effect in the corresponding method. Details are not described herein again.

### BRIEF DESCRIPTION OF DRAWINGS

FIG. 1 is a diagram of an example of an electronic device interface according to an embodiment of this application;
FIG. 2 is a diagram of an example of generating a bitmap by an application according to an embodiment of this application;
FIG. 3A-1 to and FIG. 3B are diagrams of an example of interfaces according to an embodiment of this application;
FIG. 4 is a diagram of an example of a process in which an electronic device generates the interfaces shown in FIG. 3A-1 to FIG. 3B according to an embodiment of this application;
FIG. 5A to FIG. 5C-2 are diagrams of an example of generating a plurality of frames of interfaces in an animation process based on an extended bitmap according to an embodiment of this application;
FIG. 6A to FIG. 6C-2 are diagrams of another example of generating a plurality of frames of interfaces in an animation process based on an extended bitmap according to an embodiment of this application;
FIG. 7A and FIG. 7B are a diagram of another example of generating a plurality of frames of interfaces in an animation process based on a bitmap corresponding to a differential dirty area according to an embodiment of this application;
FIG. 8 is a diagram of an example of a procedure of an interface generation method according to an embodiment of this application;
FIG. 9A to FIG. 9C each are a diagram of an example of generating an extended bitmap according to an embodiment of this application;
FIG. 10A and FIG. 10B are diagrams of an example of generating a plurality of frames of interfaces of an animation based on a first extended bitmap according to an embodiment of this application;
FIG. 11 is a diagram of another example of a procedure of an interface generation method according to an embodiment of this application;
FIG. 12A and FIG. 12B are diagrams of an example of generating a plurality of frames of interfaces of an animation based on an extended bitmap and a bitmap corresponding to a static area according to an embodiment of this application;
FIG. 13 is a diagram of an example of generating a plurality of frames of interfaces of an animation based on a bitmap corresponding to a differential dirty area according to an embodiment of this application;
FIG. 14A and FIG. 14B are diagrams of an example of delay loading of an extended bitmap according to an embodiment of this application;
FIG. 15A-1 to FIG. 15C-2 are diagrams of another example of generating a plurality of frames of interfaces in an animation process based on an extended bitmap according to an embodiment of this application;
FIG. 16 is a diagram of an example of a software structure of an electronic device according to an embodiment of this application; and
FIG. 17 is a diagram of an example of a hardware structure of an electronic device according to an embodiment of this application.

### DESCRIPTION OF EMBODIMENTS

Terms used in the following embodiments of this application are merely intended to describe specific embodiments, but are not intended to limit this application. As used in this specification and the appended claims of this application, a singular expression form "one", "a", "said", "the foregoing", "the", or "this", is intended to also include a plural expression form, unless the opposite is explicitly indicated in the context thereof. It should be further understood that the term "and/or" used in this application indicates and includes any or all possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of an electronic device.

The interface is used as the medium interface for interaction and information exchange between the application and the user. Each time a vertical synchronizing signal arrives, the electronic device needs to generate an interface (or an image) of an application for the foreground application. A frequency of the vertical synchronizing signal is related to a refresh rate of a screen of the electronic device. For example, the frequency of the vertical synchronizing signal is the same as the refresh rate of the screen of the electronic device.

In other words, each time before the electronic device refreshes content displayed on the screen, the electronic device needs to generate an interface of the application for the foreground application, to present the newly generated interface of the application to the user when the screen is refreshed.

When the electronic device generates an interface of an application, the application needs to perform rendering to generate a bitmap (bitmap), and transfer the bitmap of the application to a surface flinger (SurfaceFlinger). In other words, the application acts as a producer to draw and generate a bitmap, and stores the bitmap in a buffer queue (BufferQueue) provided by the surface flinger. The surface flinger acts as a consumer to continuously obtain, from the buffer queue, the bitmap generated by the application. The bitmap is located on a surface generated by the application. The surface is filled in the buffer queue.

After the surface flinger obtains a bitmap of a visible application, the surface flinger and a hardware composer (Hardware Composer, HWC) determine a layer compositing manner in which a bitmap is used as a layer (layer).

After the surface flinger and/or the hardware composer perform/performs bitmap composition, the surface flinger and/or the hardware composer fill/fills, into a frame buffer (Frame Buffer), a bitmap obtained through composition and transfers the bitmap to a display subsystem (Display Subsystem, DSS). After obtaining the bitmap obtained through composition, the DSS may display the bitmap on the screen. The frame buffer may be an on-screen buffer (on-screen buffer). The bitmap may also be referred to as a layer on the surface flinger.

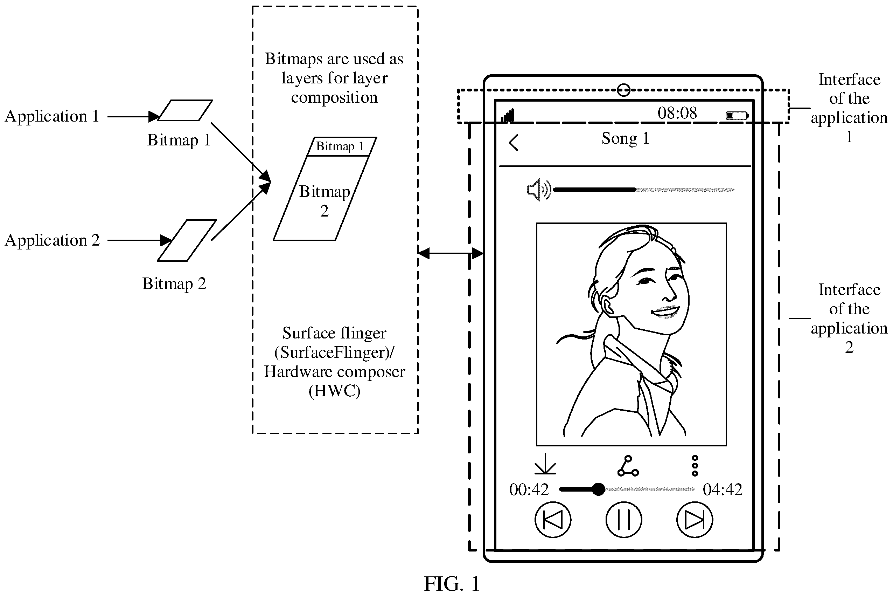

FIG. 1 is a diagram of an example of generating an electronic device interface according to an embodiment of this application.

As shown in FIG. 1, an interface of an application 1 and an interface of an application 2 are displayed on a screen of an electronic device. The interface of the application 1 may be referred to as a status bar. In FIG. 1, the application 1 may be an operating system, and the application 2 may be a music application.

Before displaying the interface shown in FIG. 1, the electronic device needs to separately and independently generate a bitmap of an application. The interface of the status bar is maintained by the operating system, that is, it may be considered that the application that generates a bitmap of the status bar is the operating system. In other words, after generating a bitmap 1, the operating system transfers the bitmap 1 to a surface flinger; and after generating a bitmap 2, the music application transfers the bitmap 2 to the surface flinger. The bitmap 1 carries image information of the status bar, and the bitmap 2 carries image information of the music application.

After receiving the bitmap 1 and the bitmap 2, the surface flinger and/or a hardware composer perform/performs layer composition by using the bitmap 1 and the bitmap 2 as layers. Unless otherwise specified, a process in which the interface of the status bar or the like is generated and a process in which the interface of the status bar or the like participates in layer composition are not described in detail again in the following.

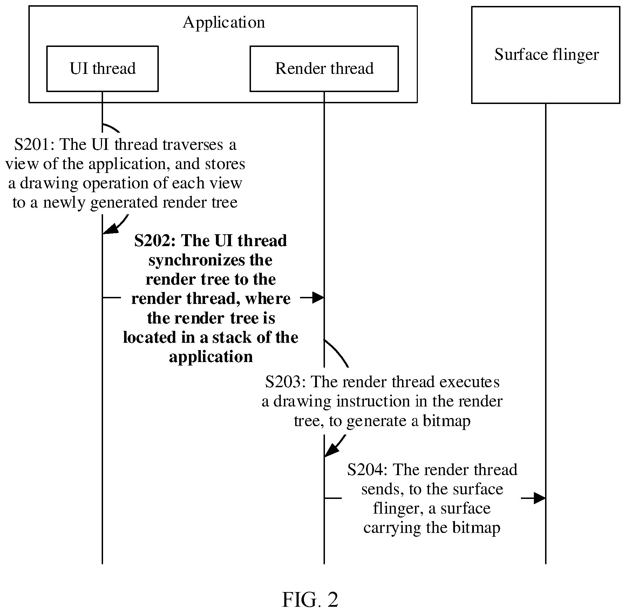

A process of generating a bitmap by an application is shown in FIG. 2.

FIG. 2 is a diagram of an example of generating a bitmap by an application according to an embodiment of this application.

S201: A UI thread traverses a view of an application, and stores a drawing operation of each view to a newly generated render tree.

The UI thread (UI thread, UI Thread) makes a view hierarchy (view hierarchy) invalid. The UI thread traverses the view (view) of the application through measurement method invocation (measure()), layout method invocation (layout()), and drawing method invocation (draw()), determines and stores the drawing operation of each view, and records, into a drawing instruction list (displaylist) of a render node (RenderNode) of the render tree, the view and the drawing operation (for example, drawline) related to the view. Data stored in the drawing instruction list may be a drawing operation (DrawOP or DrawListOP) structure.

The view (view) is a basic element that forms an application interface, and one control on the interface may correspond to one or more views.

Optionally, in some implementations of this application, in drawing method invocation, the UI thread of the application may further read, into a memory, content carried on the view, for example, an image carried on an image view (imageview), and a text carried on a text view (textview). Alternatively, in drawing method invocation, the UI thread of the application determines an operation of reading, into the memory, the content carried on the view, and records the operation into the drawing instruction list. The drawing operation structure in the drawing instruction list may also be referred to as a drawing instruction.

The drawing operation structure is a data structure, and is used to draw a graph, for example, draw a line, draw a rectangle, or draw a text. When the render node is traversed, the drawing operation structure may be converted, by using a rendering engine, into API invocation of the image processing library, for example, interface invocation of an OpenGL ES library, a Vulkan library, or a Metal library. For example, in the rendering engine (Skia library), the drawline may be encapsulated as a DrawLineOp. The DrawLineOp is a data structure, and the data structure includes information about drawing data such as a length and a width of a line. The DrawLineOp may be further encapsulated as interface invocation of the OpenGL ES library, the Vulkan library, or the Metal library, to obtain a GPU instruction. The OpenGL ES library, the Vulkan library, and the Metal library may be collectively referred to as the image processing library or a graphics rendering library. In a process of generating a frame of interface, the electronic device generates a rendering instruction by using the OpenGL ES library, the Vulkan library, or the Metal library. The image processing library provides a graphics rendering API, driver support, and the like.

The DrawOP may be stored in a stack of the application in a chained data structure.

The drawing instruction list may be a buffer. The buffer records all drawing operation structures included in a frame of interface of the application or identifiers, such as, an address and a sequence number of all drawing operations included in a frame of interface of the application. When the application has a plurality of windows or is displayed in different display (display) areas, a plurality of render trees corresponding to the plurality of windows need to be generated independently.

The render tree is generated by the UI thread and is used to generate a data structure on the application interface. The render tree may include a plurality of render nodes, and each render node includes a render property and a drawing instruction list. The render tree records a part or all of information about generating a frame of interface of the application.

Optionally, in some implementations of this application, the UI thread may traverse only a view of a dirty area (which may also be referred to as an area that needs to be redrawn), to generate a differential render tree. After the differential render tree is transferred/synchronized to a render thread, the render thread may determine, based on the differential render tree and a render tree used for rendering of a previous frame, a render tree that needs to be used for rendering an interface of a current frame.

S202: The UI thread synchronizes the render tree to the render thread, where the render tree is located in the stack of the application.

The UI thread transfers/synchronizes the render tree to the render thread (Render Thread), where the render tree is located in the stack (stack) of a process corresponding to the application.

S203: The render thread executes a drawing instruction in the render tree, to generate the bitmap.

The render thread first obtains a hardware canvas (HardwareCanvas) and performs the drawing operation in the render tree on the hardware canvas, to generate the bitmap. The hardware canvas is located on a surface of the application, and the surface carries the bitmap or data that is in another format and that is used to store image information.

S204: The render thread sends, to a surface flinger, the surface carrying the bitmap.

The render thread sends the generated bitmap to the surface flinger through the surface for participating in layer composition.

Step S201 may be considered as a construction phase, and is mainly responsible for determining properties such as a size, a location, and transparency of each view in the application. For example, the drawline in the view may be encapsulated into a DrawLineOp during construction. The DrawLineOp includes the drawing data such as the length and the width of the line, may further include interface invocation corresponding to the DrawLineOp of an underlying graphics processing library, and is used to call the underlying graphics library for generation of the bitmap in a rendering phase.

Similarly, it may be considered that step S203 is the rendering phase, and is mainly responsible for traversing the render node of the render tree, and performing the drawing operation on each render node, to generate the bitmap on the hardware canvas. In this process, the render thread calls the underlying graphics processing library like the OpenGL ES library, the Vulkan library, or the Metal library, to call a GPU to complete rendering, so as to generate the bitmap.

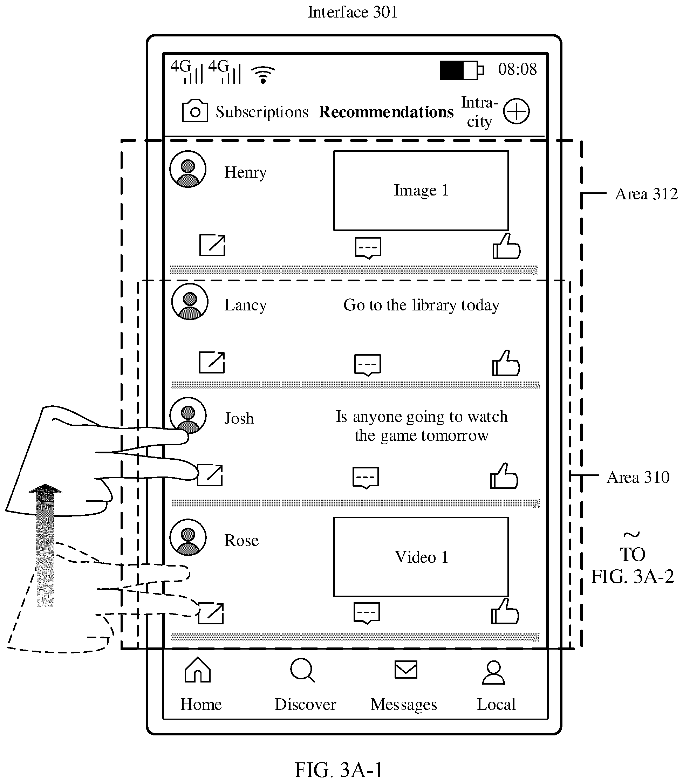

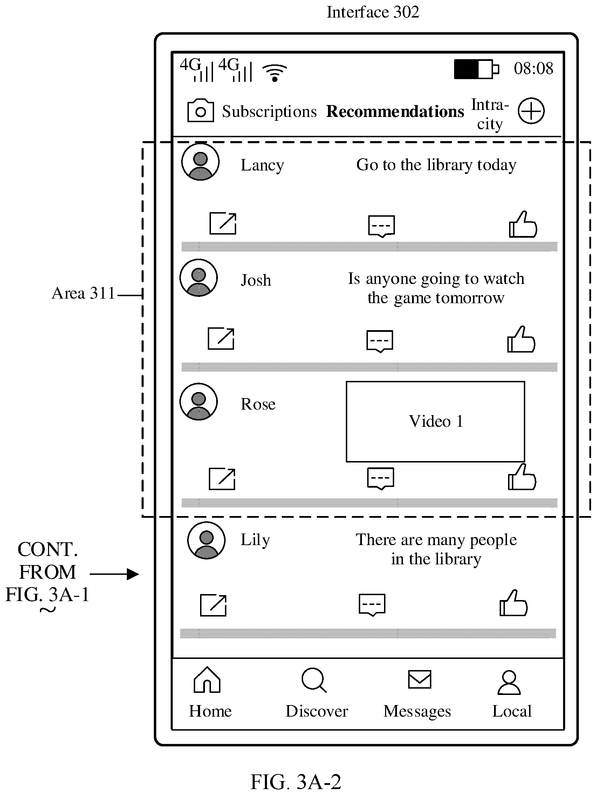

In most scenarios, to comply with a visual habit of a consumer, content displayed by the application usually changes continuously rather than discontinuously, that is, same display content may generally appear on a plurality of consecutive frames of interfaces, for example, as shown in FIG. 3A-1 to FIG. 3B in the following.

FIG. 3A-1 to FIG. 3B are diagrams of an example of interfaces according to an embodiment of this application.

As shown in FIG. 3A-1 and FIG. 3A-2, after a sliding operation is received, an interface displayed by the electronic device changes from an interface 301 to an interface 302. By comparing the interface 301 with the interface 302, it can be learned that, after the electronic device receives the sliding operation, in a process in which the interface displayed by the electronic device changes, content displayed in an area 312 changes, and therefore, the area 312 is a dirty area.

However, in the area 312, there is always same display content in a sliding process. For example, display content in an area 310 on the interface 301 and display content in an area 311 on the interface 302 are the same display content, that is, only a location of a part of the display content in the dirty area changes, but a view hierarchy of the part of the display content and content such as an image and a text carried on a view do not change.

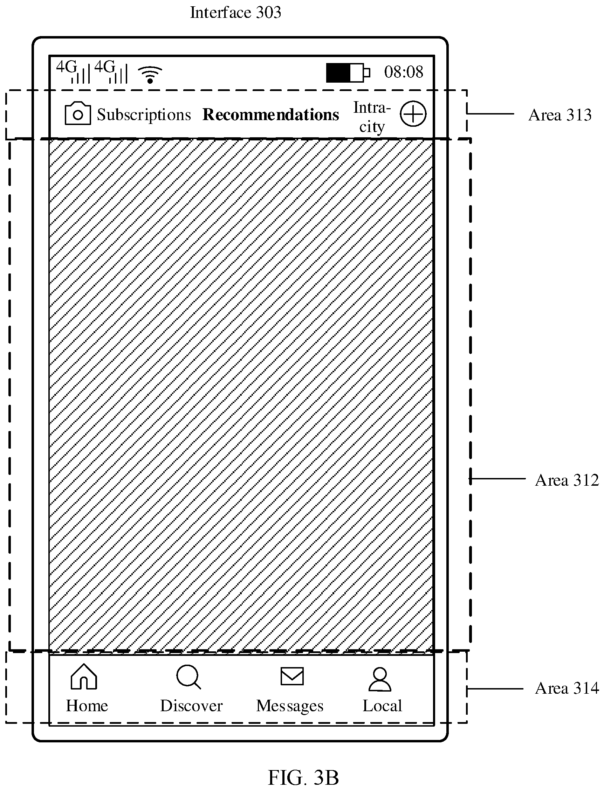

As shown in FIG. 3B, in the sliding process, on an interface 303, an area 313 and an area 314 other than the area 312 do not change, and therefore, the area 313 and the area 314 are not dirty areas.

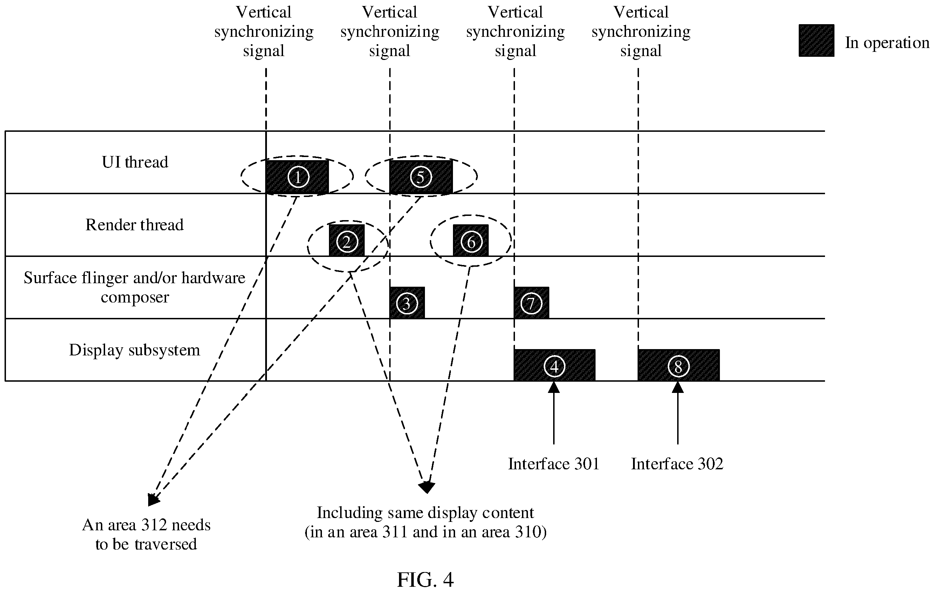

Based on this, a process in which the electronic device generates a plurality of consecutive frames of interfaces is shown in FIG. 4 below.

FIG. 4 is a diagram of an example of a process in which an electronic device generates the interfaces shown in FIG. 3A-1 to FIG. 3B according to an embodiment of this application.

As shown in FIG. 4, in the sliding process, a process of generating the A^{th} frame of interface by the electronic device is shown as ①, ②, ③, and ④ in FIG. 4; and a process of generating the (A+B)^{th} frame of interface by the electronic device is shown as ⑤, ⑥, ⑦, and ⑧ in FIG. 4. The A^{th} frame of interface may be the interface 301 in FIG. 3A-1 and FIG. 3A-2, and the B^{th} frame of interface may be the interface 302 in FIG. 3A-1 and FIG. 3A-2, where B=A+C, and A, B, and C are all positive integers.

① and ⑤ in FIG. 4 both indicate that a UI thread of an application traverses the dirty area, to generate a differential render tree (alternatively, the UI thread of the application traverses all the areas, to generate a new render tree); ② and ⑥ in FIG. 4 indicate that a render thread of the application generates a new render tree based on the differential render tree and a render tree corresponding to a previous frame of interface, and then calls a GPU to perform rendering to generate a bitmap (if the render thread receives the new render tree, the new render tree is directly used to perform rendering); ③ and ⑦ in FIG. 4 indicate that a surface flinger and/or a hardware composer perform/performs layer composition by using the bitmap as a layer; and ④ and ⑧ in FIG. 4 indicate a process of sending and display performed by a display subsystem.

It is clear that, in content shown in FIG. 4, even if the dirty area has the same display content, in ① and ⑤ in FIG. 4, the UI thread of the application may also traverse the dirty area, to generate the differential render tree, resulting in wasting of a resource of the UI thread and increasing of power consumption of the electronic device; and in the sliding process, in ② and ④ in FIG. 4, display content in the area 314 and display content in the area 313 do not change, and the bitmap generated by the render thread includes the same display content (namely, the display content in the area 314 and the area 313), resulting in wasting of a resource of the render thread and increasing of power consumption of the electronic device.

Because energy efficiency of generating an interface in a method shown in FIG. 4 is low, embodiments of this application provide an interface generation method and an electronic device, so that an energy efficiency ratio of generating the plurality of consecutive frames of interfaces by the electronic device can be improved.

According to the interface generation method provided in embodiments of this application, before an animation starts or after the animation starts, an extended bitmap is generated in advance, and in an animation duration process, the UI thread does not need to traverse the dirty area or all the areas, the UI thread may not synchronize the render tree to the render thread, the render thread may not perform rendering to generate the bitmap, and the surface flinger and/or the hardware composer perform/performs operations such as cropping and/or splicing on the extended bitmap, to generate a next frame of interface. The extended bitmap includes image information or display content in a dirty area on a plurality of frames of interfaces in the animation duration process, and the extended bitmap does not have redundancy.

The extended bitmap may also be referred to as a first bitmap.

For example, the animation may include sliding. In addition, the animation duration process is at least two frames of interfaces.

Optionally, in some implementations of this application, in the animation duration process, before display content of a previously generated extended bitmap cannot meet an animation requirement, a new extended bitmap is generated.

Optionally, in some implementations of this application, before the animation starts (or after the animation starts), the extended bitmap is generated in advance, and in the animation duration process, the UI thread no longer traverses the dirty area, the render thread no longer performs corresponding rendering, and the surface flinger and/or the hardware composer perform/performs operations such as capturing and/or splicing on the extended bitmap, to generate the plurality of frames of interfaces in the animation duration process. The interface of the application includes a dirty area and a non-dirty area, and content in the non-dirty area is generated by the render thread at least once in an entire animation process. After performing operations such as capturing and/or splicing on the extended bitmap, the surface flinger and/or the hardware composer may further perform operation like splicing on the bitmap that carries the content in the non-dirty area.

In animation duration multi-frame time, the electronic device may generate one or more frames of extended bitmaps.

Optionally, in some implementations of this application, before the animation starts or after the animation starts, a static area (for example, the area 313 and the area 314 in FIG. 3B) bitmap and the extended bitmap are generated in advance, and in the animation duration process, the UI thread does not perform traversal, the render thread does not perform corresponding rendering, and the surface flinger and/or the hardware composer perform/performs operations such as capturing and/or splicing on the extended bitmap and the static area bitmap, to generate the plurality of frames of interfaces in the animation duration process. A static area is an area includes a view that does not change on the plurality of frames of interfaces in the animation duration process.

Optionally, in some implementations of this application, in the animation duration process, the UI thread no longer traverses same display content in the dirty area of the previous frame and the dirty area of the current frame, the render thread no longer render the same content in the dirty area of the previous frame and the dirty area of the current frame, and the surface flinger and/or the hardware composer perform/performs operations such as capturing and/or splicing on a dirty area bitmap, to generate the plurality of frames of interfaces in the animation duration process. In the animation duration process, the UI thread traverses only a differential dirty area, the render thread renders the differential dirty area, and the surface flinger and/or the hardware composer perform/performs operations such as splicing and/or cropping on a bitmap corresponding to the differential dirty area and a bitmap corresponding to the previous frame of interface, to generate the plurality of frames of interfaces in the animation duration process. The differential dirty area is an area in which display content in the dirty area of the current frame is different from display content in the dirty area of the previous frame.

Optionally, in some implementations of this application, before the animation starts, the UI thread transfers, to the render thread, one or more parameters used to determine change logic of the animation. In multi-frame duration of the animation, the render thread updates the render tree, and then performs corresponding rendering.

Optionally, in some implementations of this application, the bitmap corresponding to the interface of the application is not generated by the render thread of the application, but is generated by a render process independent of the application. The render process may be referred to as a unified render process (UniRender).

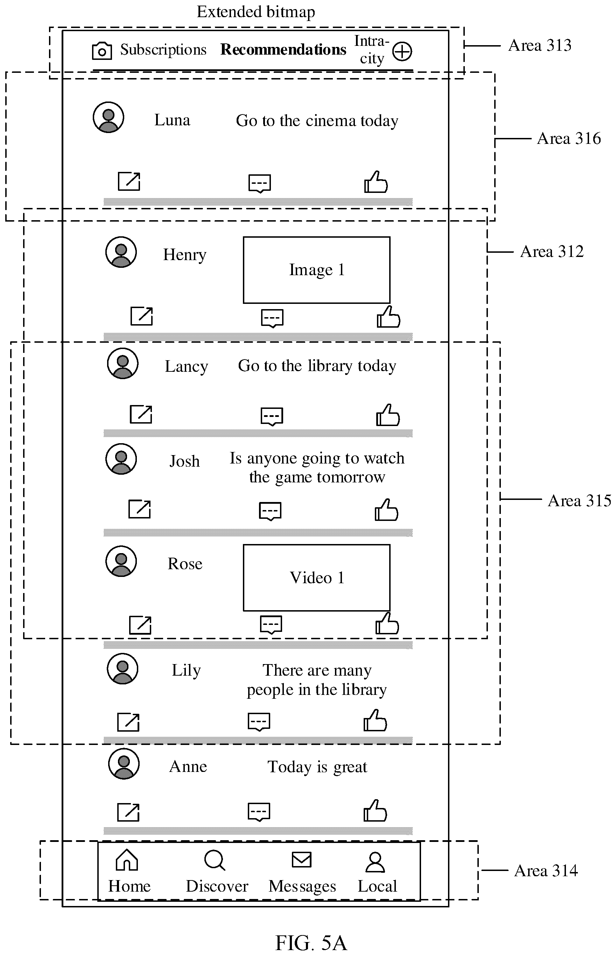

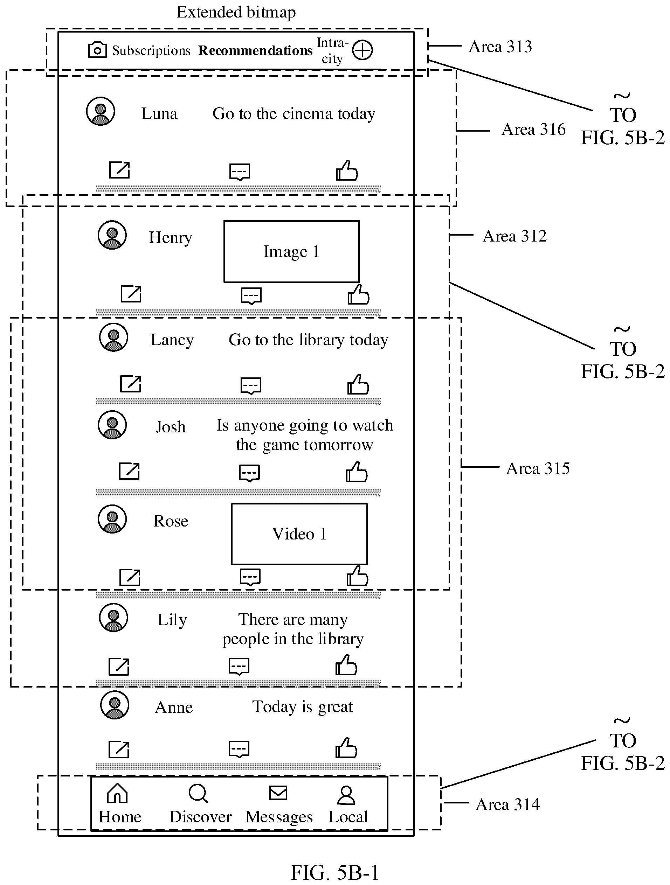

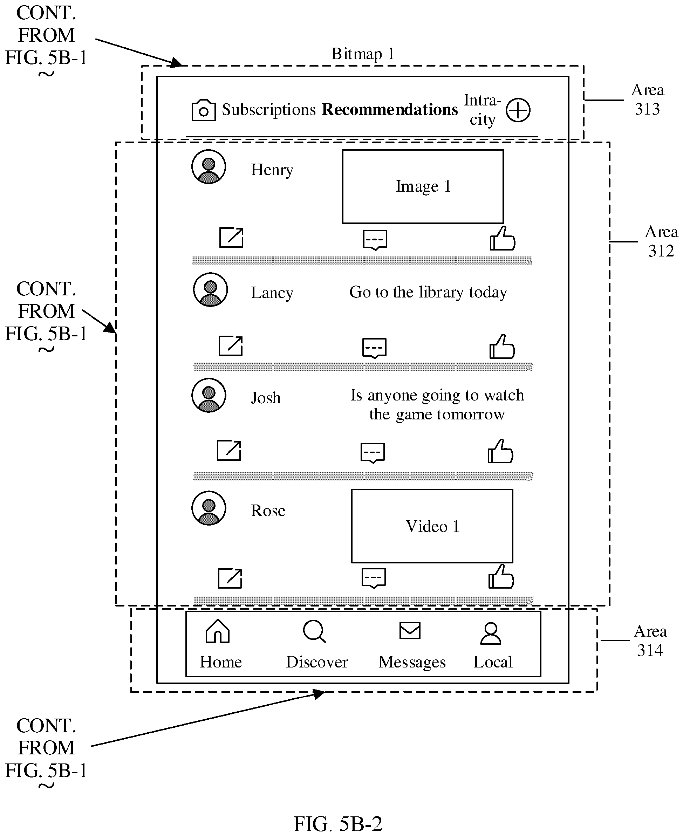

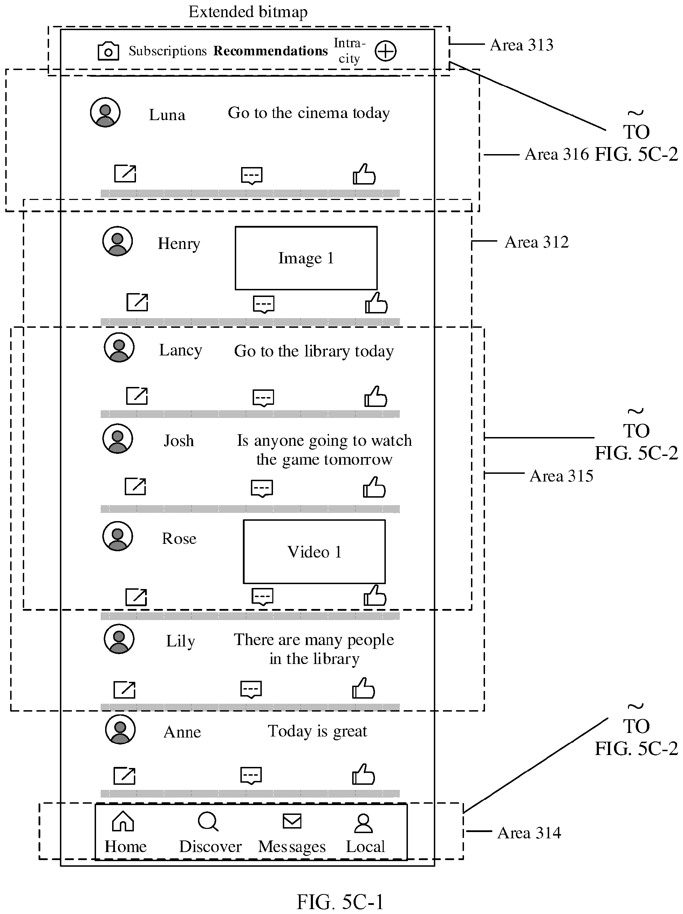

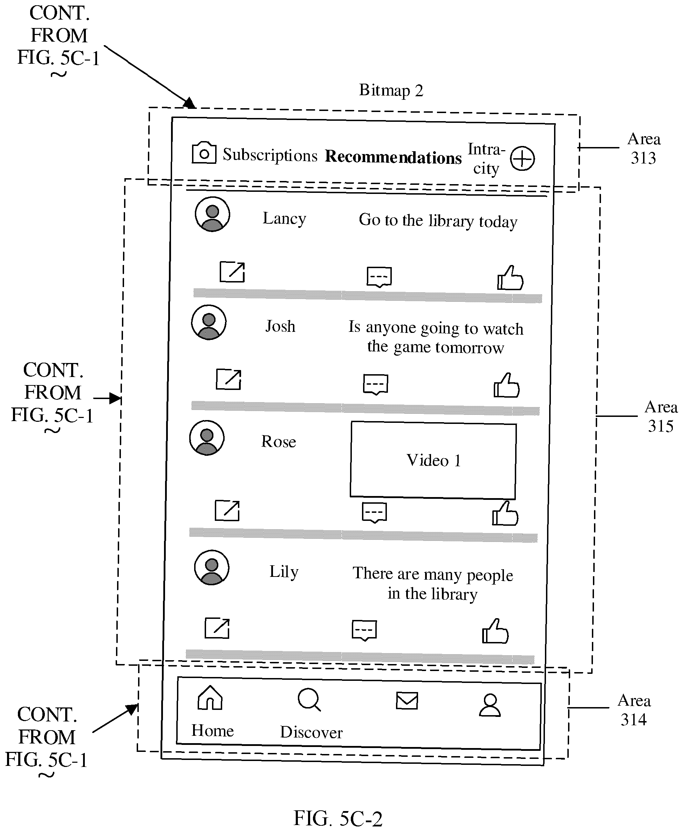

With reference to content shown in FIG. 5A to FIG. 7B, the following describes, by using examples, a process of generating the interfaces shown in FIG. 3A-1 to FIG. 3B in the interface generation method provided in embodiments of this application.

FIG. 5A to FIG. 5C-2 are diagrams of an example of generating a plurality of frames of interfaces in an animation process based on an extended bitmap according to an embodiment of this application.

Before the animation starts or after the animation starts, the UI thread of the application may generate a render tree corresponding to the extended bitmap, and transfer or synchronize the render tree to the render thread or the render process to generate the extended bitmap, where the extended bitmap is shown in FIG. 5A. The extended bitmap includes the area 312, the area 313, the area 314, and an area 315.

Optionally, in some implementations of this application, after the application determines a change of the animation, for example, the change of the animation is a sliding direction change, the generated extended bitmap does not include an otiose area. In other words, in FIG. 5A, if the application determines that a sliding direction is a direction of sliding downward, and if the 1^{st} frame of interface is shown as the interface 301, the extended bitmap may not include an area 316, that is, the extended bitmap is extended in the sliding direction instead of a non-sliding direction relative to a bitmap that is generated by the application render thread and that corresponds to one frame of interface.

If the A^{th} frame of interface of the animation is the interface 301, a bitmap 1 corresponding to the interface 301 is shown in FIG. 5B-1 and FIG. 5B-2, where the bitmap 1 includes the area 312, the area 313, and the area 314 of the extended bitmap. If the B^{th} frame of interface of the animation is the interface 302, a bitmap 2 corresponding to the interface 302 is shown in FIG. 5C-1 and FIG. 5C-2, where the bitmap 2 includes the area 315, the area 313, and the area 314 of the extended bitmap.

It is clear that, before the display content of the extended bitmap cannot meet the animation requirement, the UI thread of the application does not need to traverse the view to generate the render tree or the differential render tree, and the render thread or the render process does not need to generate a bitmap, so that a calculation amount of the electronic device in the animation process is reduced; and the UI thread and the render thread or the render process do not need to participate in generation of the plurality of frames of interfaces in the animation process, and only the surface flinger and/or the hardware composer need/needs to perform cropping and splicing on the extended bitmap, so that a probability of animation freezing is reduced, and an energy efficiency ratio of interface generation is improved.

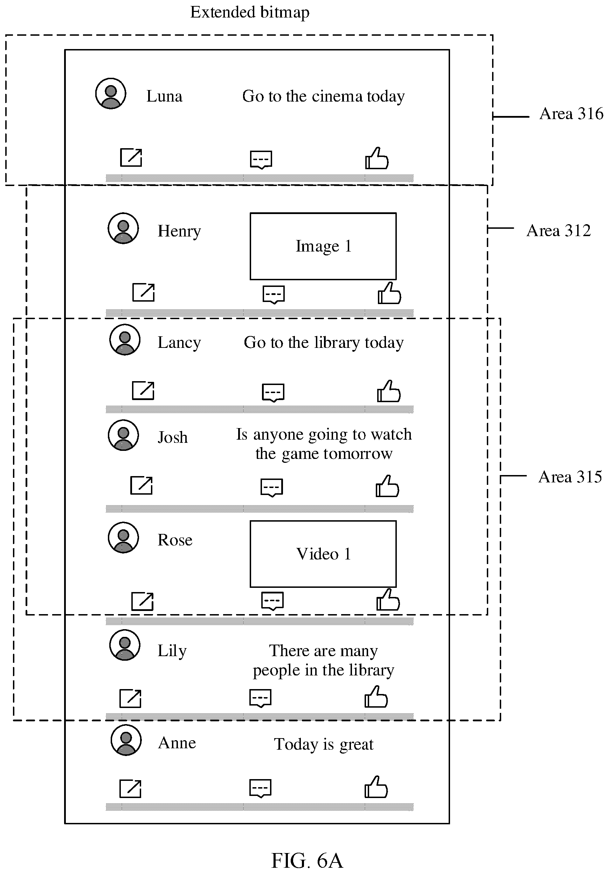

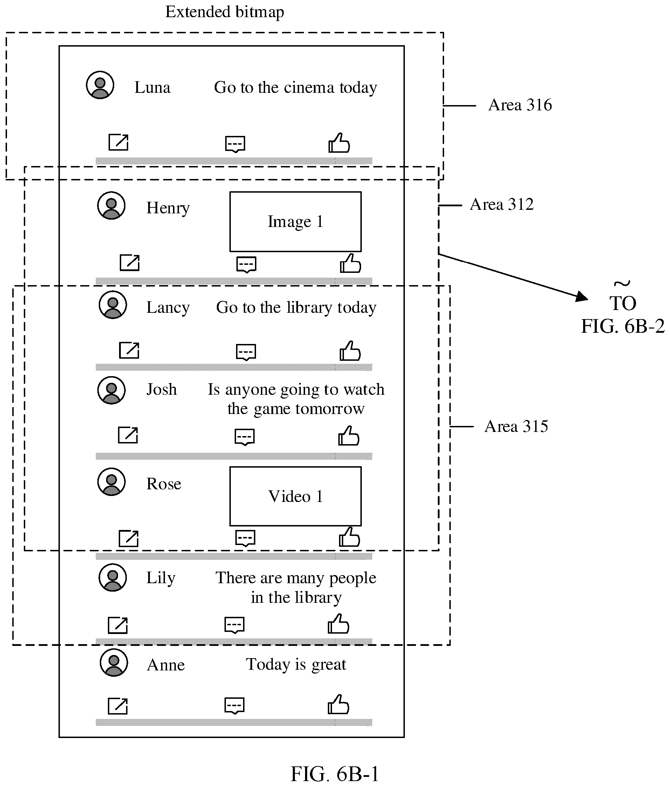

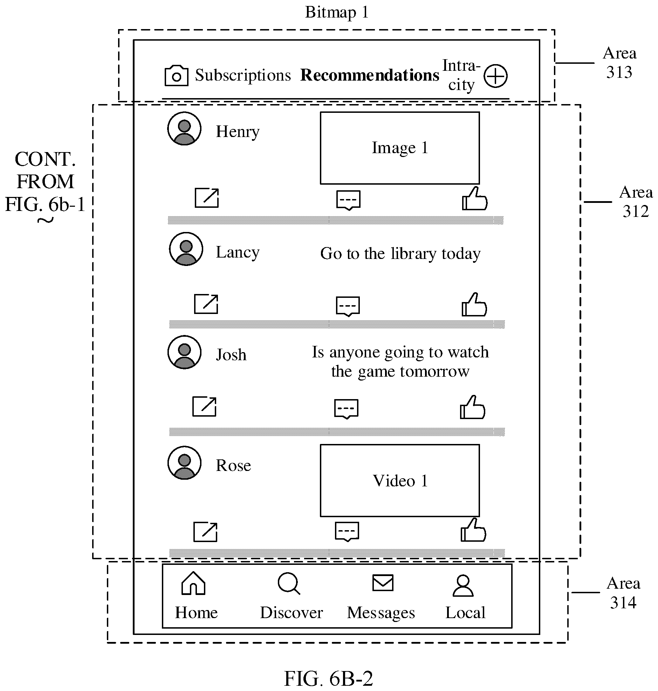

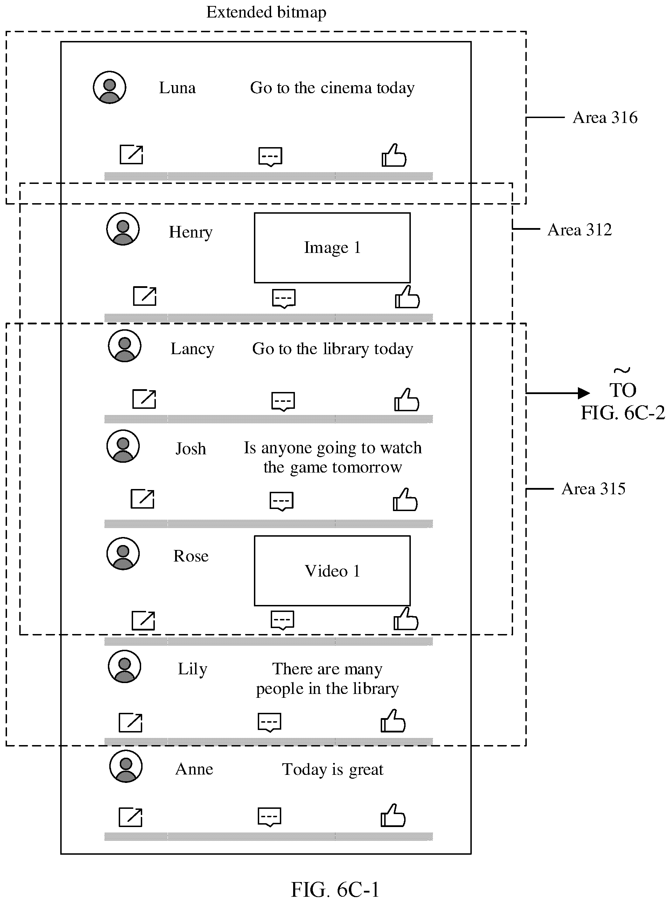

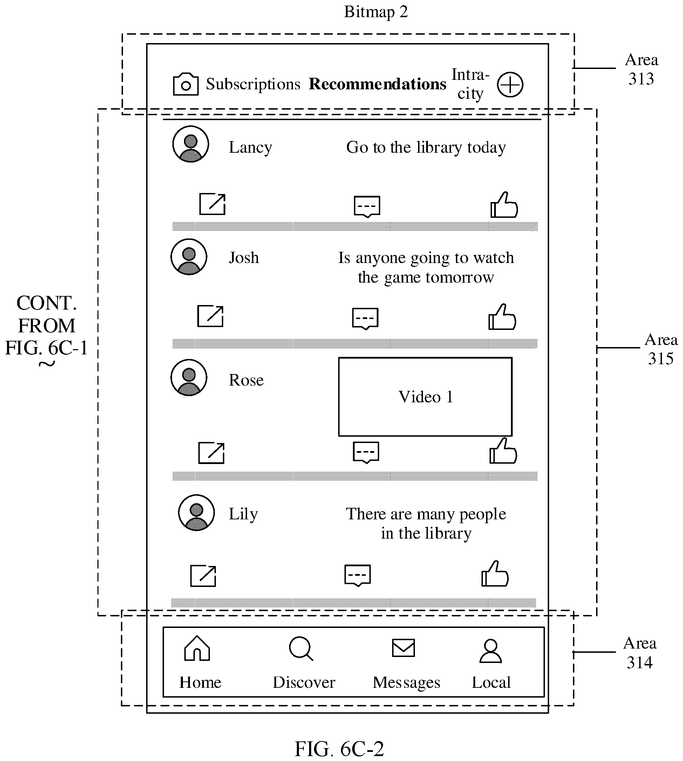

FIG. 6A to FIG. 6C-2 are diagrams of another example of generating a plurality of frames of interfaces in an animation process based on an extended bitmap according to an embodiment of this application.

Before the animation starts or after the animation starts, the UI thread of the application may generate the extended bitmap, where the extended bitmap is shown in FIG. 6A. The extended bitmap includes the area 316, the area 312, and the area 315.

Optionally, in some implementations of this application, after the application determines a change of the animation, for example, the change of the animation is a sliding direction change, the generated extended bitmap does not include an otiose area. In other words, in FIG. 6A, if the application determines that a sliding direction is a direction of sliding downward, and if the 1^{st} frame of interface is shown as the interface 301, the extended bitmap may not include the area 316, that is, the extended bitmap is extended in the sliding direction instead of a non-sliding direction relative to a bitmap that is generated by the normal application render thread and that corresponds to one frame of interface.

If the A^{th} frame of interface of the animation is the interface 301, a bitmap 1 corresponding to the interface 301 is shown in FIG. 6B-1 and FIG. 6B-2, where the bitmap 1 includes the area 312 of the extended bitmap. If the B^{th} frame of interface of the animation is the interface 302, a bitmap 2 corresponding to the interface 302 is shown in FIG. 6C-1 and FIG. 6C-2, where the bitmap 2 includes the area 315 of the extended bitmap.

Optionally, in some implementations of this application, before the surface flinger and/or the hardware composer compose/composes the bitmap 1 or the bitmap 2 based on the extended bitmap, the surface flinger and/or the hardware composer may receive a static bitmap that is generated by the render thread or the render process and that corresponds to the area 313 and the area 314, and then perform operations such as cropping and/or splicing on the static bitmap and the extended bitmap, to generate the bitmap 1 or the bitmap 2.

Optionally, in some implementations of this application, after it is detected that an animation trigger condition is met, the UI thread may declare the static area (namely, the area 313 and the area 314), so that the render thread or the render process, and the surface flinger and/or the hardware composer retain image information such as a bitmap corresponding to the area. The surface flinger and/or the hardware composer may generate the bitmap 1 or the bitmap 2 based on the extended bitmap and the static bitmap.

It is clear that, before the display content of the extended bitmap cannot meet the animation requirement, the display content of the render tree or the differential render tree generated by the UI thread of the application is in the extended bitmap, and in this way, the UI thread of the application does not need to perform traversal to generate the render tree or the differential render tree, so that a calculation amount of the electronic device in the animation process is reduced; and the UI thread does not need to participate in generation of the plurality of frames of interfaces in the animation process, and only the surface flinger and/or the hardware composer need/needs to perform cropping and splicing on the bitmap, so that a probability of animation freezing is reduced. In addition, after the UI thread declares the static area, in the animation process, the bitmap corresponding to the static area is generated and stored for reuse, and therefore, the render thread or the render process does not need to generate a same bitmap in each frame. In this way, the calculation amount is reduced, the probability of animation freezing is reduced, and an energy efficiency ratio of interface generation is improved.

Compared with the extended bitmap shown in FIG. 6A to FIG. 6C-2, the extended bitmap in FIG. 5A to FIG. 5C-2 is extension of the interface of the application, and the extended bitmap in FIG. 6A to FIG. 6C-2, is extension of the dirty area of the interface of the application. It is clear that, if only the dirty area is extended, a calculation amount and a delay of generating the extended bitmap can be reduced, and when a view hierarchy of the interface of the application is complex, a manner of generating a bitmap through capturing and/or splicing performed on the extended bitmap shown in FIG. 6A to FIG. 6C-2, is more convenient.

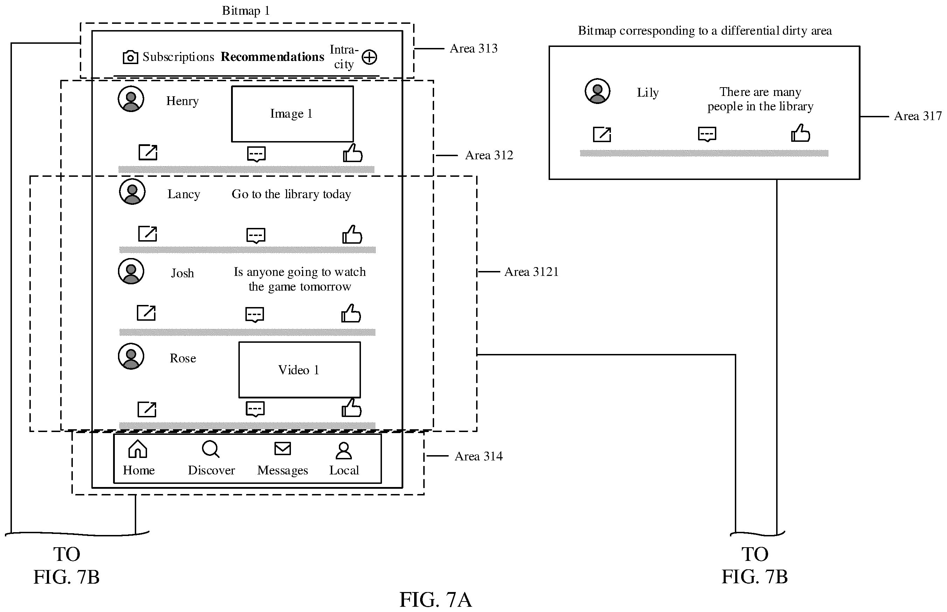

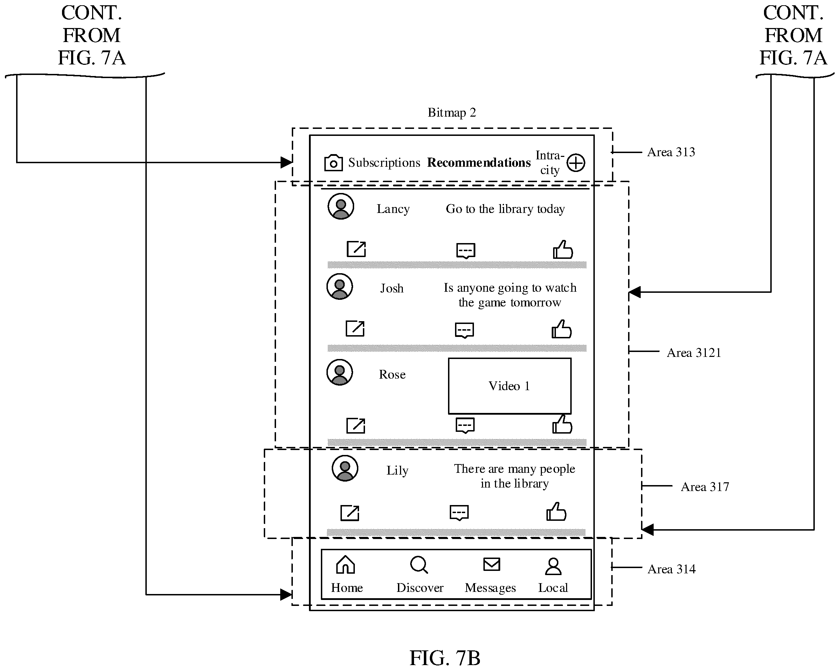

FIG. 7A and FIG. 7B are a diagram of another example of generating a plurality of frames of interfaces in an animation process based on a bitmap corresponding to a differential dirty area according to an embodiment of this application.

After the animation starts, the UI thread of the application traverses only the differential dirty area to generate the differential render tree; and the render thread generates, based on the differential render tree, the bitmap corresponding to the differential dirty area. If the interface 301 is the previous frame of interface, and the interface 302 is the next frame of interface, as shown in FIG. 7A and FIG. 7B, the bitmap corresponding to the differential dirty area is an area 317, and the bitmap corresponding to the interface 301 is a bitmap 1. The bitmap 1 includes the area 312, the area 313, and the area 314, where the area 312 includes an area 3121.

After receiving the bitmap corresponding to the differential dirty area, the surface flinger and/or the hardware composer may perform operations such as splicing and/or cropping on the bitmap corresponding to the differential dirty area and the bitmap 1 corresponding to the previous frame of interface, to generate a bitmap 2, where the bitmap 2 is the bitmap corresponding to the interface 302. The bitmap 2 includes the area 313, the area 3121, the area 317, and the area 314.

In content shown in FIG. 7A and FIG. 7B, the area 3121, the area 313, and the area 314 are content captured from the bitmap 1 by the surface flinger and/or the hardware composer.

It may be understood that, because an area that needs to be traversed by the UI thread is reduced, a render operation that needs to be performed by the render thread is also correspondingly reduced, so that a calculation amount in the animation process can be reduced, power consumption of the electronic device can be reduced, a probability of frame freezing in the animation can be reduced, and an energy efficiency ratio of interface generation can be improved.

In comparison with the method shown in FIG. 5A to FIG. 6C-2, in the method shown in FIG. 7A and FIG. 7B, in a process of generating each frame of interface in the animation duration process, the UI thread still needs to traverse the view corresponding to the differential dirty area, and the render thread or the render process still needs to generate the bitmap corresponding to the differential dirty area. However, in the method shown in FIG. 7A and FIG. 7B, a calculation amount and a delay of generating a bitmap on the 1^{st} frame of interface of the animation can be reduced.

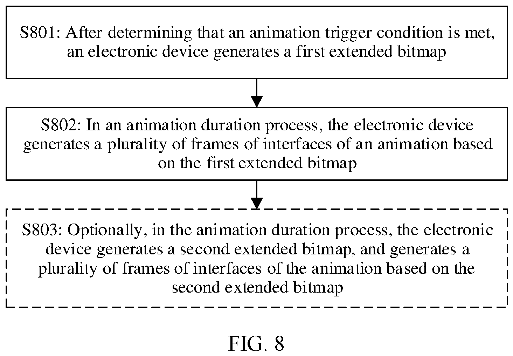

With reference to content shown in FIG. 8, the following describes a procedure of an interface generation method provided in embodiments of this application.

FIG. 8 is a diagram of an example of a procedure of an interface generation method according to an embodiment of this application.

S801: After determining that an animation trigger condition is met, an electronic device generates a first extended bitmap.

After detecting an input of a user, the electronic device may send the input to an application, and the application determines whether the animation trigger condition is met. For example, for a sliding animation, a trigger condition may be whether a sliding operation of the user is received. The sliding operation may be referred to as a first operation, and the sliding animation may be referred to as a first animation.

Optionally, in some implementations of this application, an animation trigger event may be used by the application to determine whether the animation trigger condition is met.

In a process of receiving the sliding operation of the user, or after the sliding operation of the user is received, or after the sliding operation of the user is received and a hand of the user has left a screen, for example, when an interface enters a habitual sliding state, the application generates the first extended bitmap.

An extended bitmap is a bitmap whose size is larger than that of an original bitmap, or the extended bitmap is a bitmap whose coverage area is larger than that of the original bitmap, or the extended bitmap is a bitmap that covers more display content than the original bitmap. When the extended bitmap includes only a dirty area, the original bitmap means a part that corresponds to the dirty area and that is in the bitmap. For example, the original bitmap is a bitmap corresponding to an interface before an animation starts, or a bitmap corresponding to the 1^{st} frame of interface displayed when the animation starts, or a bitmap corresponding to content that can be currently viewed by the user on the screen.

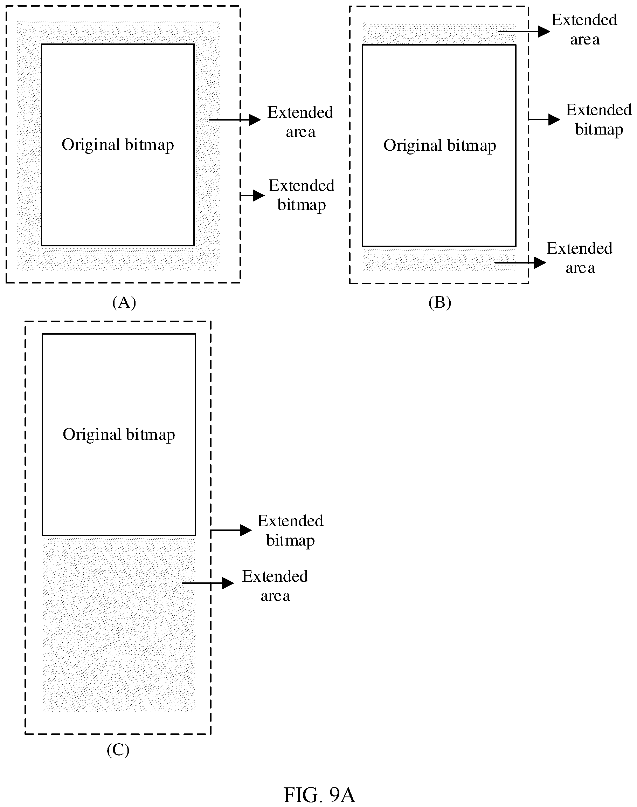

The following describes examples of several manners of implementing an extended bitmap, as shown in FIG. 9A to FIG. 9C.

FIG. 9A to FIG. 9C each are a diagram of an example of generating an extended bitmap according to an embodiment of this application.

A relationship between the extended bitmap and an original bitmap is shown in FIG. 9A, where the extended bitmap may include a part or all of the original bitmap and an extended area. The extended area may be an extension, in any direction, of the original bitmap.

Optionally, in some implementations of this application, as shown in (A) in FIG. 9A, the extended area extends in a periphery direction; or as shown in (B) in FIG. 9A, the extended area extends in a top-down direction; or as shown in (B) in FIG. 9A, the extended area extends in a downward direction.

Optionally, in some implementations of this application, before generating the extended bitmap, the application may determine an extension direction of the extended area based on change logic of the animation, an identifier of the animation, or the like. For example, when the operation received by the application is an operation of sliding downward, it is determined that a sliding direction of the sliding animation is a direction of sliding downward, and then it is determined that the extended area is an extension, in the downward direction, of the original bitmap, as shown in (C) in FIG. 9A. In other words, the extended bitmap varies based on different triggered animations.

The operation of sliding downward may also be referred to as a slide-up operation, that is, the sliding direction is from up to down. A relationship between a start location and an end location of the operation of sliding downward is as follows: On the screen, the start location is below the end location. For example, the start location of the operation of sliding downward is the bottom of the screen, and the end location of the operation of sliding downward is the top of the screen.

Because views on which the animation acts are different, or views related to dirty areas caused by the animation are different, the electronic device has a plurality of methods for generating an extended bitmap. The following uses a list view (listview) as an example to describe examples of two methods for generating an extended bitmap. The method for generating an extended bitmap is also applicable to other views such as a recyclerview, a grid view (gridview), and a customized view. This is not limited herein.

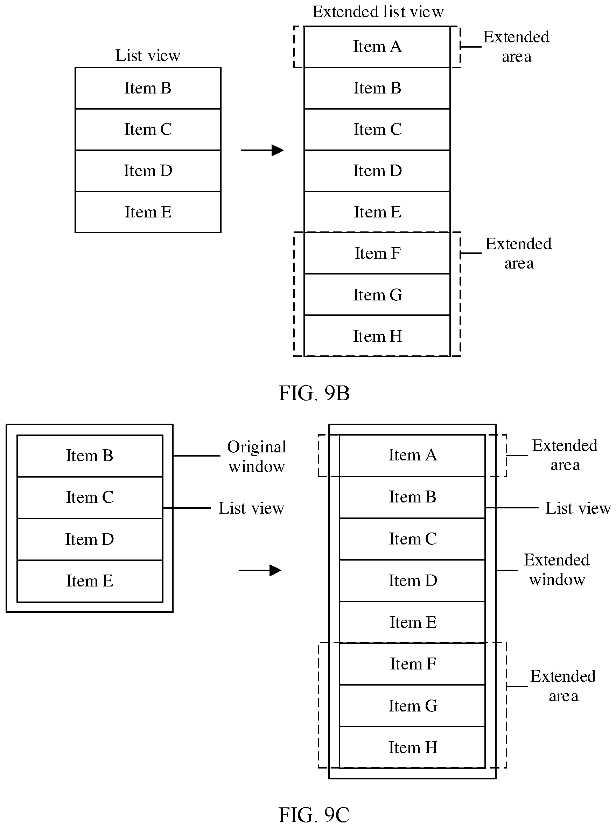

As shown in FIG. 9B, the list view includes four sub-items (Item): Item B, Item C, Item D, and Item E. When the electronic device determines that an extended bitmap needs to be generated, and a view on which the animation acts includes the list view, or a dirty area caused by the animation is related to the list view, the list view may enable the extended area. After the list view enables the extended area, the list view includes eight items: Item A, Item B, Item C, Item D, Item E, Item F, Item G, and Item H, where Item A, Item F, Item G, and Item H are items corresponding to the extended area. The list view may enable the extended area in a plurality of manners, for example, determine whether to enable the extended area based on a preview property or parameter.

After a UI thread traverses the view, the UI thread may generate a drawing operation structure corresponding to each of Item A, Item F, Item G, and Item H to a render node of a render tree. A render thread may call a GPU to execute the drawing operation structure in the render tree, to generate the extended bitmap.

Optionally, in some implementations of this application, source code of the list view may be modified at an application framework layer, to add the preview property or parameter to the list view, so as to enable the extended area. Before the animation starts or after the animation starts, the application enables the extended area based on the preview property or parameter. After the animation ends or a condition for generating an interface based on the extended bitmap is not met, the application invalidates the extended area based on the preview property or parameter.

Optionally, in some implementations of this application, an extended list view may be implemented by modifying a height or a width of the list view.

It may be understood that, in a manner of extending the bitmap shown in FIG. 9B, a property or a parameter of the view needs to be modified, for example, the preview property or parameter mentioned above, or the height or width of the view described above. Different from a manner in FIG. 9B, a manner of extending a bitmap shown in FIG. 9C is to modify a size of a window of the application.

As shown in FIG. 9C, when the electronic device determines that an extended bitmap needs to be generated, and the view on which the animation acts includes the list view, or the dirty area caused by the animation is related to the list view, a window management server notifies the application that a window used by the current application to present an interface changes from an original window to an extended window. Alternatively, when the view on which it is determined that the animation acts and that is of the application includes the list view, or the dirty area caused by the animation is related to the list view, the UI thread of the application performs traversal in a size of an extended window. Because the size of the extended window is greater than that of an original window, correspondingly, an absolute size occupied by the list view increases, and the list view may include more items. Added Items form the extended area, and the added Items are Item A, Item F, Item G, and Item H. The unmodified size of the window may be referred to as a first size, and the modified size of the window may be referred to as a second size.

Optionally, in some implementations of this application, after the animation ends or the condition for generating the interface based on the extended bitmap is not met, if the extended bitmap is implemented by using the extended window, the size of the window needs to be restored.

After the UI thread of the application traverses the view, the UI thread may generate the drawing operation structure corresponding to each of Item A, Item F, Item G, and Item H to the render node of the render tree. The render thread may call the GPU to execute the drawing operation structure in the render tree, to generate the extended bitmap.

Optionally, in some implementations of this application, the application may determine a size of the extended area, or configure a quantity of items included in the extended area.

Optionally, in some implementations of this application, an operating system notifies the application of the size of the extended area, or the operating system configures a quantity of items included in the extended area of the application. The operating system may determine, based on a calculation amount for generating the 1^{st} frame of interface, current GPU load, current CPU load, an animation type, and/or the like, the size of the extended area and/or the quantity of items included in the extended area.

The electronic device may generate the first extended bitmap in the manners shown in FIG. 9A to FIG. 9C.

S802: In an animation duration process, the electronic device generates a plurality of frames of interfaces of the animation based on the first extended bitmap.

In the animation duration process, the electronic device may perform operations such as splicing and/or cropping on the first extended bitmap, to generate the plurality of frames of interfaces of the animation, for example, as shown in FIG. 6B-1 and FIG. 6B-2 or FIG. 6C-1 and FIG. 6C-2 in the foregoing.

The UI thread of the application may determine, based on animation logic, an area, in the first extended bitmap, of an interface that needs to be currently displayed, and notify a surface flinger and/or a hardware composer of the area.

When the animation is the sliding animation, based on parameters such as a sliding distance and/or a sliding speed of the sliding operation, the UI thread of the application may further determine an area, in the first extended bitmap, of each frame of interface in the animation process. The parameters such as the sliding distance and/or the sliding speed of the sliding operation are located in the animation trigger event, and further are obtained by the UI thread.

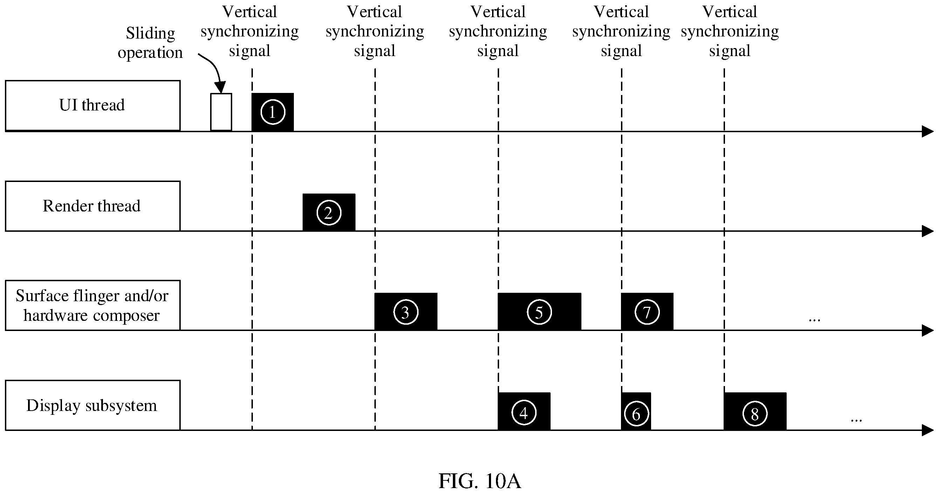

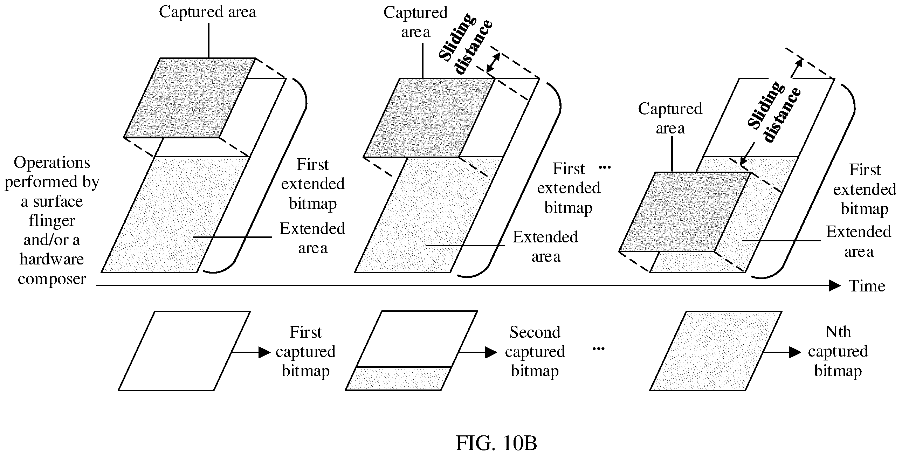

With reference to content shown in FIG. 10A and FIG. 10B, an example of generating the plurality of frames of interfaces of the animation based on the first extended bitmap is described.

FIG. 10A and FIG. 10B are diagrams of an example of generating a plurality of frames of interfaces of an animation based on a first extended bitmap according to an embodiment of this application.

As shown in FIG. 10A, after the electronic device receives the sliding operation of the user, the operating system transfers the operation to the application. After the UI thread of the application receives the sliding operation, it is determined that the animation trigger condition is met.

Generating the 1^{st} frame of interface in the animation process is , ②, ③, and ④ in FIG. 10A; generating the 2^{nd} frame of interface in the animation process is ⑤ and ⑥ in FIG. 10A; and generating the 3^{rd} frame of interface in the animation process is ⑦ and ⑧ in FIG. 10A.

A process of generating the 1^{st} frame of interface in the animation process is as follows: After the UI thread of the application receives a vertical synchronizing signal, the UI thread of the application generates a render tree (or a differential render tree) corresponding to the first extended bitmap, as shown in ① in FIG. 10A, and then transfers or synchronizes the render tree to the render thread or a render process. After the render thread or the render process receives the render tree, the first extended bitmap is generated, as shown in ② in FIG. 10A, and then transfers the first extended bitmap to the surface flinger and/or the hardware composer. The surface flinger and/or the hardware composer perform/performs operations such as cropping and/or splicing on the first extended bitmap to generate a first captured bitmap, as shown in ③ in FIG. 10A, and then transfers the first captured bitmap to a display subsystem. The display subsystem may send the first captured bitmap for display, and display one frame of interface of the animation on the screen, as shown in ④ in FIG. 10A.

A process of generating the 2^{nd} frame of interface in the animation process is as follows: The surface flinger and/or the hardware composer perform/performs operations such as cropping and/or splicing on the first extended bitmap to generate a second captured bitmap, as shown in ⑤ in FIG. 10A, and then transfers the second captured bitmap to the display subsystem. The display subsystem may send the second captured bitmap for display, and display one frame of interface of the animation on the screen, as shown in ⑥ in FIG. 10A.

A process of generating the 3^{rd} frame of interface in the animation process is as follows: The surface flinger and/or the hardware composer perform/performs operations such as cropping and/or splicing on the first extended bitmap to generate a third captured bitmap, as shown in ⑦ in FIG. 10A, and then transfers the third captured bitmap to the display subsystem. The display subsystem may send the third captured bitmap for display, and display one frame of interface of the animation on the screen, as shown in ⑧ in FIG. 10A.

Optionally, in some implementations of this application, in ③, ⑤, and ⑦, if a range related to the animation does not cover all of an interface of the application (for example, does not cover a non-dirty area), an unchanged area may also participate in the operations such as cropping and/or splicing for generation of a captured bitmap in ③, ⑤, and ⑦, for example, the area 313 and the area 314 of the interface 301. The area 313 and the area 314 of the interface 301 may be captured from the extended bitmap in another captured area.

Optionally, in some implementations of this application, deformation, blurring, and transparency adjustment may be performed on all or a part of the captured bitmap, to implement more complex animation effect.

With reference to content shown in FIG. 10A, it can be learned that, in the animation process, before display content of the first extended bitmap cannot meet an animation requirement, the UI thread of the application does not need to traverse the view, and the render thread does not need to generate the bitmap, so that a calculation amount in an interface generation process is reduced, and power consumption of the electronic device is further reduced.

In the animation process, the application may send a message to the surface flinger and/or the hardware composer to indicate the surface flinger and/or the hardware composer to determine a relative location relationship between a captured area and the first extended bitmap, so as to determine the captured bitmap.

Optionally, in some implementations of this application, the application may send a message to the surface flinger and/or the hardware composer each time after receiving the vertical synchronizing signal, where the message is used to determine a relative location relationship between the first extended bitmap and the captured area of a current frame of interface.

Optionally, in some implementations of this application, the application may send a message to the surface flinger and/or the hardware composer when the animation starts or before the animation starts, where the message indicates a relative location relationship between the first extended bitmap and the captured area in the animation process. For example, the message may include duration and a total variation of the animation, where a variation of each frame is determined by the surface flinger and/or the hardware composer, and the surface flinger and/or the hardware composer determine/determines the relative location relationship between the captured area and the first extended bitmap based on the variation of each frame. For another example, the message may include a variation of each frame and a total variation of the animation. Similarly, the surface flinger and/or the hardware composer may also determine the relative location relationship between the captured area and the first extended bitmap based on the message.

The following uses an example in which the view is a list view and the animation is the sliding animation to describe an example of a process in which the surface flinger and/or the hardware composer perform/performs operations such as cropping and/or splicing on the first extended bitmap to generate a captured bitmap like the first captured bitmap or the second captured bitmap.

As shown in FIG. 10B, after the first extended bitmap is generated, the surface flinger and/or the hardware composer determine/determines that the sliding distance is 0, and directly perform/performs capturing on the first extended bitmap based on the captured area to obtain the first captured bitmap. Similarly, in the process of generating the 2^{nd} frame of interface, after determining the sliding distance, the surface flinger and/or the hardware composer adjust/adjusts a relative location between the captured area and the first extended bitmap, and perform/performs capturing on the first extended bitmap based on the captured area to obtain the second captured bitmap.

When a change of an interface of the electronic devices is shown on the interface 301 and the interface 302, some content (non-dirty area), for example, the area 313 and the area 314, does not belong to the area related to the animation. Therefore, the area 313 and the area 314 may be captured from the first extended bitmap, and then participate in a splicing process of the captured bitmap like the first captured bitmap or the second captured bitmap. A cropping process and splicing process of the area 313 or the area 314 are not shown in FIG. 10B.

It should be noted that, in content shown in FIG. 10B, only one captured area is described as an example. However, the interface generation method provided in embodiments of this application is not limited to one captured area. Based on different animations, a captured bitmap in the animation duration process may be obtained through capturing performed on a plurality of captured areas and through splicing, or a captured bitmap may be obtained capturing is performed on a plurality of captured areas and then deformation, blurring, or the like is performed.

S803: Optionally, in the animation duration process, the electronic device generates a second extended bitmap, and generates a plurality of frames of interfaces of the animation based on the second extended bitmap.

After generating the first extended bitmap, the electronic device may generate the second extended bitmap before the display content of the first extended bitmap cannot meet the animation requirement; or the electronic device may generate the second extended bitmap when determining that the display content of the first extended bitmap cannot meet the animation requirement.

The second extended bitmap may also be referred to as a sixth bitmap.

For a method for generating the second extended bitmap, refer to the foregoing descriptions of step S801. Details are not described herein again. For a method for generating the plurality of frames of interfaces of the animation based on the second extended bitmap, refer to the foregoing descriptions of step S802. Details are not described herein again.

Optionally, in some implementations of this application, if parameters such as a size of the extended area and/or the quantity of items included in the extended area are/is configured by the UI thread, the application determines that the display content of the first extended bitmap cannot meet the animation requirement after first duration since the animation starts, and in this case, the UI thread of the application may generate the second extended bitmap within the first duration since the animation starts.

Optionally, in some implementations of this application, when the captured area is close to the bottom of the first extended bitmap (for example, when the operation is the operation of sliding downward, an area between a lower edge of the captured area and a lower edge of the first extended bitmap is less than X pixels) due to a change of the relative location of the first extended bitmap and the captured area, the surface flinger and/or the hardware composer sends a message to the UI thread of the application, where the message indicates the UI thread of the application to generate the second extended bitmap.

Optionally, in some implementations of this application, when the captured area exceeds the first extended bitmap, the surface flinger and/or the hardware composer sends a message to the UI thread of the application, where the message indicates the UI thread of the application to generate the second extended bitmap.

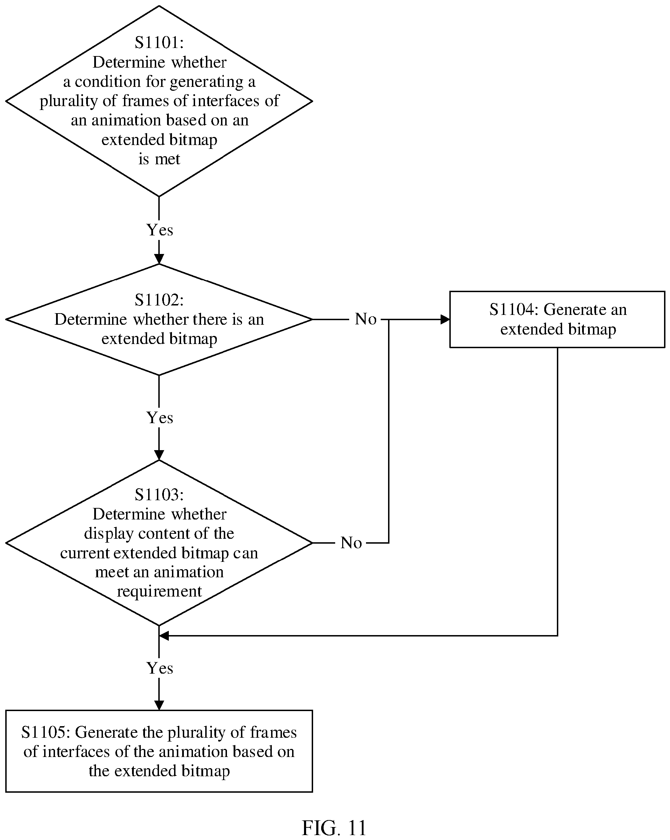

FIG. 11 is a diagram of another example of a procedure of an interface generation method according to an embodiment of this application.

S1101: Determine whether a condition for generating a plurality of frames of interfaces of an animation based on an extended bitmap is met.

If it is determined that the condition for generating the plurality of frames of interfaces of the animation based on the extended bitmap is met, step S1102 is performed.

Optionally, in some implementations of this application, when the animation is sliding, the condition for generating the plurality of frames of interfaces of the animation based on the extended bitmap is met.

Optionally, in some implementations of this application, if in some animation types, generating the plurality of frames of interfaces of the animation based on the extended bitmap is supported, when it is determined that a triggered animation belongs to the some animation types, it is determined that the condition for generating the plurality of frames of interfaces of the animation based on the extended bitmap is met.

S1102: Determine whether there is an extended bitmap.

If there is an extended bitmap exists, step S1103 is performed; or if there is no extended bitmap, step S1104 is performed.

S1103: Determine whether display content of the current extended bitmap can meet an animation requirement.

If the display content of the current extended bitmap can meet the animation requirement, step S1105 is performed; or if the display content of the current extended bitmap cannot meet the animation requirement, step S1104 is performed.

S1104: Generate an extended bitmap.

S1105: Generate the plurality of frames of interfaces of the animation based on the extended bitmap.

Optionally, in some implementations of this application, an operating system may further provide an interface for an application, and the interface is used by the application to declare a static area and a dynamic area of an interface in an animation duration process. A bitmap corresponding to the static area is generated at most once in the animation duration process, that is, the static area is traversed and rendered at most once. Based on a bitmap corresponding to the dynamic area, an extended bitmap is generated according to the interface generation method shown in FIG. 8 or FIG. 10B in the animation duration process. In this case, the extended bitmap corresponds to the dynamic area and excludes the static area.

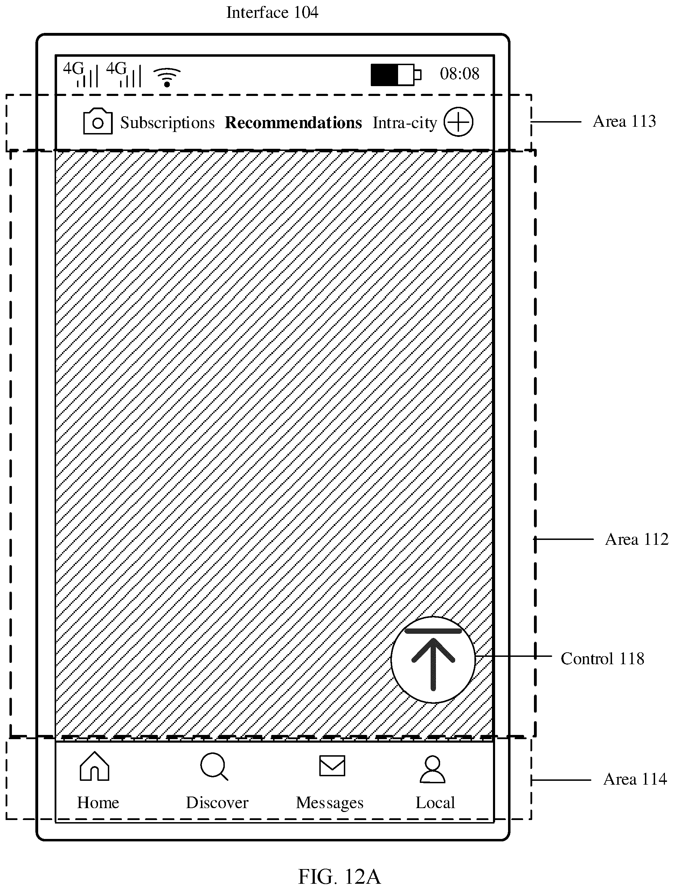

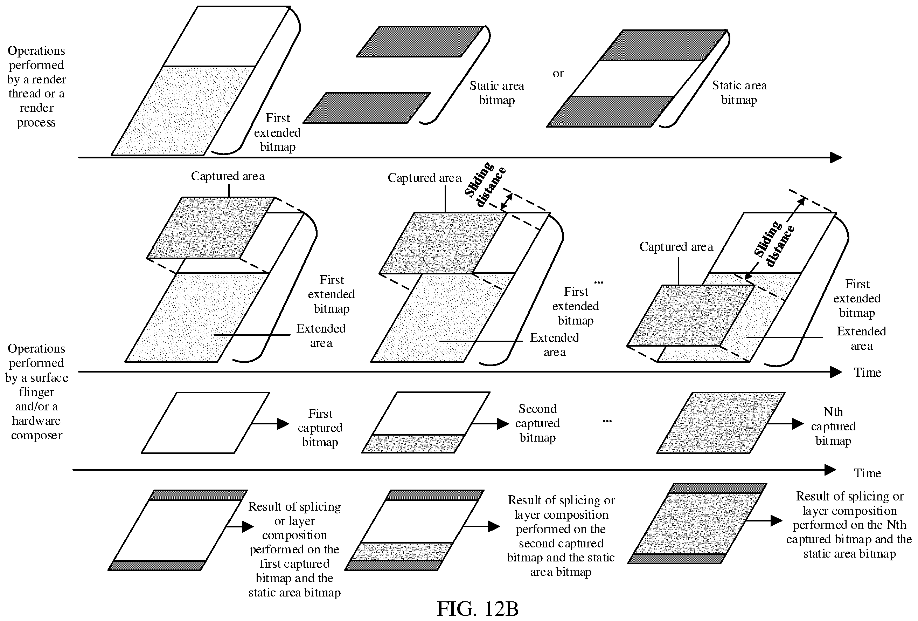

FIG. 12A and FIG. 12B are diagrams of an example of generating a plurality of frames of interfaces of an animation based on an extended bitmap and a bitmap corresponding to a static area according to an embodiment of this application.

Optionally, in some implementations of this application, the dynamic area is the same as a dirty area, that is, coverage areas are the same, and covered views are the same.

Optionally, in some implementations of this application, the dynamic area is different from the dirty area.

For example, in the content shown in FIG. 3B, the area 313 and the area 314 form the static area.

For another example, in the content shown in FIG. 12A, the area 313, the area 314, and a control 118 form the static area. A difference between FIG. 12A and FIG. 3B lies in that, an interface 104 and the interface 301 are different in that a display interface of the application further includes the control 118. The control 118 is a control used to return to the top of a list view, and during the sliding animation, the control 118 does not change. For example, returning to the top of the list view may also be referred to as resetting a focus to the top of the list view.

FIG. 12A and FIG. 12B are diagrams of an example of generating a plurality of frames of interfaces of an animation based on an extended bitmap and a bitmap corresponding to a static area according to an embodiment of this application.

As shown in FIG. 12B, on the 1^{st} frame of interface of the animation, a render process or a render thread generates the bitmap of the static area and a first extended bitmap. Then, after capturing a first captured bitmap from the first extended bitmap, a surface flinger and/or a hardware composer perform/performs splicing or layer composition on the first captured bitmap and the static area bitmap to generate a bitmap for being sent for display.

Similarly, on the 2^{nd} frame of interface of the animation, after capturing a second captured bitmap from the first extended bitmap, the surface flinger and/or the hardware composer perform/performs splicing or layer composition on the second captured bitmap and the static area bitmap to generate a bitmap for being sent for display.

Optionally, in some implementations of this application, a size of the static area bitmap may be the same as a size of a window of the application, where the bitmap corresponding to the static area has a blank area. In this case, the surface flinger and/or the hardware composer may perform layer composition on the captured bitmap and the static area bitmap to generate a bitmap for being sent for display.

Optionally, in some implementations of this application, the size of the static area bitmap may be the same as a range of display content in the static area. In this case, the surface flinger and/or the hardware composer may perform splicing on the captured bitmap and the static area bitmap to generate a bitmap for being sent for display.

It may be understood that, in the entire animation duration process, in a case in which a plurality of extended bitmaps are generated, and the static area bitmap is generated only once.

Optionally, in some implementations of this application, the static area bitmap may be captured from one frame of interface before the animation starts. A location of the static area may be notified by the application to the surface flinger and/or the hardware composer.

It may be understood that, in the interface generation method shown in FIG. 12A and FIG. 12B, the static area is obtained through division in advance, so that the static area can be reused in the animation duration process, and repeated content does not need to be generated each time an extended bitmap is generated; and further, when there is a floating view on the interface of the application and content shielded by the floating view is the dirty area, the floating view falls into the static area, so that complexity of a splicing and/or cropping process performed by the surface flinger and/or the hardware composer can be reduced.

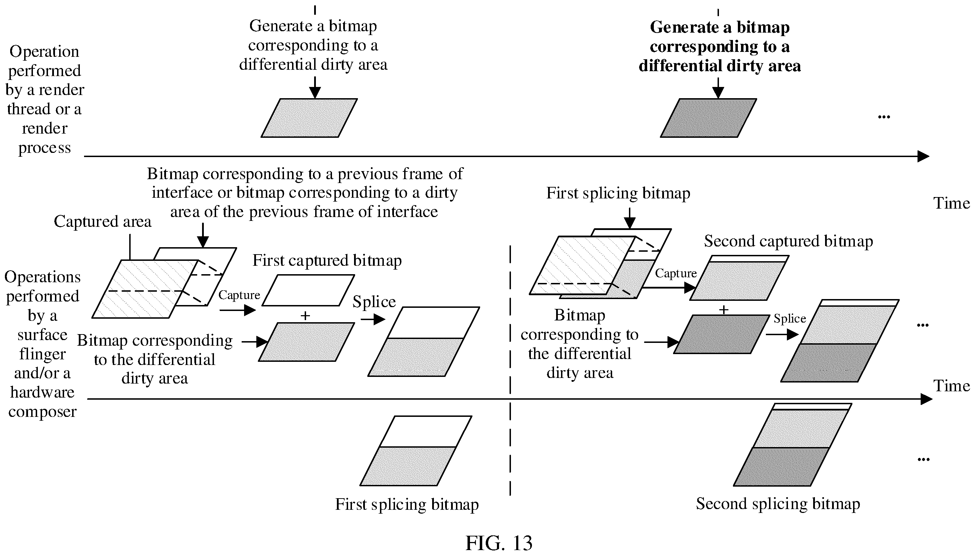

Optionally, in some implementations of this application, in the animation duration process, a UI thread traverses only a differential dirty area, the render thread or the render process performs corresponding rendering, and the surface flinger and/or the hardware composer perform/performs operations such as splicing and/or cropping on a bitmap corresponding to the differential dirty area and a bitmap corresponding to a previous frame of interface, to generate the plurality of frames of interfaces in the animation duration process, as shown in FIG. 13.

FIG. 13 is a diagram of an example of generating a plurality of frames of interfaces of an animation based on a bitmap corresponding to a differential dirty area according to an embodiment of this application.

As shown in FIG. 13, in a process of generating the A^{th} frame of interface of the animation, the render process or the render thread generates the bitmap corresponding to the differential dirty area; and the render process or the render thread transfers the bitmap corresponding to the differential dirty area to the surface flinger and/or the hardware composer. The surface flinger and/or the hardware composer may obtain the first captured bitmap through captured area cropping from the bitmap corresponding to the previous frame of interface or a bitmap corresponding to a dirty area of the previous frame of interface, and then splice the first captured bitmap and the bitmap corresponding to the differential dirty area, and a bitmap obtained through splicing is a first splicing bitmap.

In a process of generating the (A+1)^{th} frame of interface of the animation, the render process or the render thread of the application generates the bitmap corresponding to the differential dirty area; and the render process or the render thread transfers the bitmap corresponding to the differential dirty area to the surface flinger and/or the hardware composer. The surface flinger and/or the hardware composer may obtain the second captured bitmap through captured area cropping from the first splicing bitmap, and then splice the second captured bitmap and the bitmap corresponding to the differential dirty area, and a bitmap obtained through splicing is a second splicing bitmap.

The first splicing bitmap and the second splicing bitmap are bitmaps for being sent for display, and are respectively a bitmap corresponding to the A^{th} frame of interface of the animation and a bitmap corresponding to the (A+1)^{th} frame of interface of the animation.

For example, the A^{th} frame of interface of the animation is the interface 301, and a bitmap corresponding to the interface 301 is the bitmap 1 in FIG. 7A and FIG. 7B; and the (A+1)^{th} frame of interface of the animation is the interface 302, and a bitmap corresponding to the interface 302 is the bitmap 2 in FIG. 7A and FIG. 7B. In the process of generating the (A+1)^{th} frame of interface of the animation, the render thread or the render process may generate the bitmap corresponding to the differential dirty area, namely, the area 317 in FIG. 7A and FIG. 7B. The first splicing bitmap includes the area 312. The surface flinger and/or the hardware composer may obtain the second captured bitmap through captured area cropping from the first splicing bitmap, where the second captured bitmap includes the area 3 121. The surface flinger and/or the hardware composer splice/splices the second captured bitmap and the bitmap corresponding to the differential dirty area, and a bitmap obtained through splicing is the second splicing bitmap, where the second splicing bitmap includes the area 3121 and the area 317. The area 3121 and the area 317 form the area 312 in FIG. 3B, that is, the second splicing bitmap is the bitmap corresponding to the dirty area of the (A+1)^{th} frame of interface of the animation.

In content shown in FIG. 13, a splicing process of the dirty area and a non-dirty area is not shown. A bitmap corresponding to the non-dirty area may be obtained through cropping, or may be generated by the render thread or the render process.

It may be understood that, in the interface generation method shown in FIG. 13, the differential dirty area is always less than or equal to the dirty area, so that a calculation amount and a delay of traversing a view by the application can be reduced, a calculation amount and a delay of the render thread or the render process can be reduced, and further, an energy efficiency ratio of interface generation can be improved.

According to the interface generation method provided in embodiments of this application shown in FIG. 8 to FIG. 12B described above, when an extended bitmap is generated, because a size of the extended bitmap or a view covered by the extended bitmap needs to exceed a size of an original bitmap or a view covered by the original bitmap, a calculation amount required for generating the extended bitmap needs to be greater than a calculation amount required for generating the original bitmap, and time required for generating the extended bitmap is also longer than time required for generating the original bitmap. Further, the calculation amount and the time for generating the extended bitmap may be reduced in a manner provided below.

Optionally, in some implementations of this application, when the extended bitmap is generated, loading of content carried on a view in an extended area of the extended bitmap may be delayed. Delay loading means that when the extended bitmap is generated, the content carried on the view may not be loaded, loading of the content carried on the view may be delayed, and the content needs to be loaded at latest before the content is displayed.

Optionally, when the extended bitmap is generated, delay loading and/or pre-loading may be performed on the content carried on a view in all area of the extended bitmap. The pre-loading means that before the extended bitmap is generated, the content carried on the view in the extended bitmap may be obtained from an application server in advance and loaded to a cache. The delay loading means that content carried on a view may not be filled in a part of the view in the generated extended bitmap in a rendering phase. Because not all content in the extended bitmap may be displayed on one frame of interface, corresponding content may be filled in the view before the content of the view in the extended bitmap needs to be displayed.

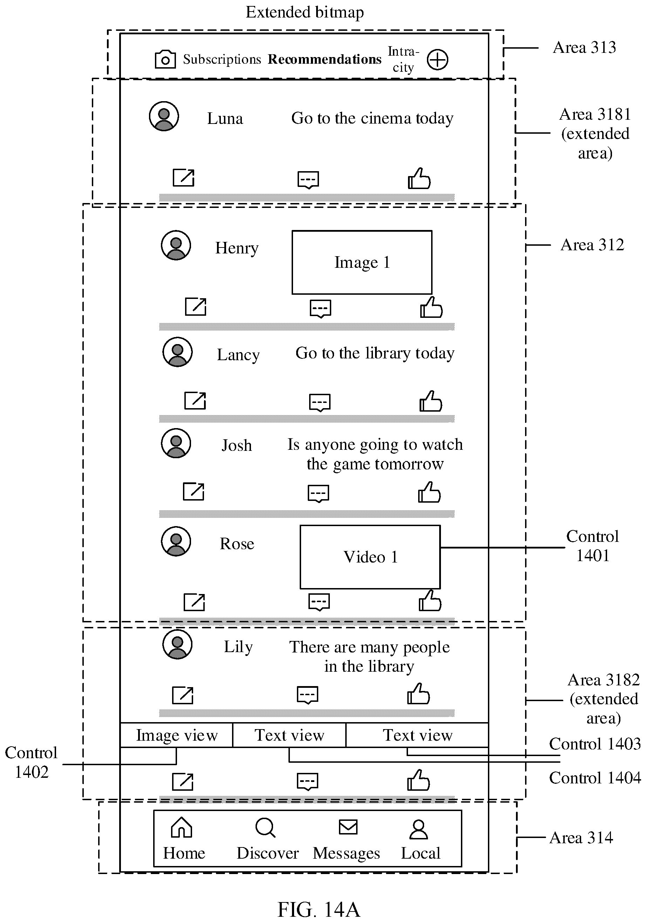

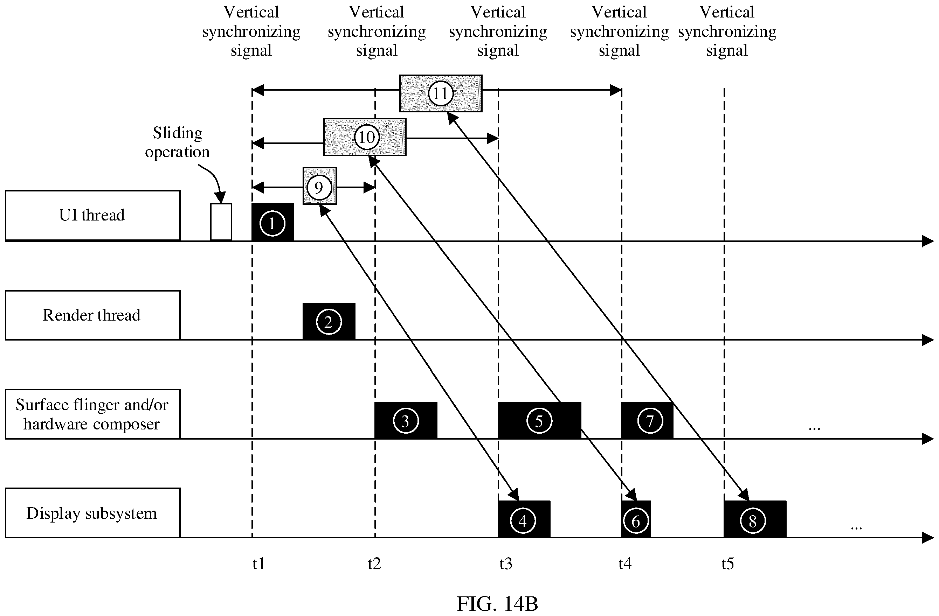

FIG. 14A and FIG. 14B are diagrams of an example of delay loading of an extended bitmap according to an embodiment of this application.

As shown in FIG. 14A, the extended area of the extended bitmap includes a plurality of controls such as a control 1402, a control 1403, and a control 1404. The control 1402 is an image view, the control 1403 is a text view, and the control 1404 is a text view. An image carried on the control 1402 needs to be obtained from the application server, and texts carried on the control 1403 and the control 1404 need to be obtained from the application server.

Because time required by a network request is fluctuant, when the extended bitmap is generated, content carried on the view may not be loaded first, to avoid blocking generation of an interface and reduce a probability of frame freezing.

When the extended bitmap is generated, content carried on the control 1402, the control 1403, and/or the control 1404 is not downloaded from the application server first; and before the control 1402, the control 1403, and/or the control 1404 need/needs to be displayed, and after the UI thread (a sub-thread created by the UI thread) of the application initiates a request to the application server to obtain corresponding display content, the surface flinger and/or the hardware composer are/is used to fill the corresponding display content in the extended bitmap or in a corresponding location of the bitmap for being sent for display.

The render thread or the render process may participate in loading of the content carried on the control, or may not participate in loading of the content carried on the control. In other words, a GPU may participate in loading of the content carried on the control, or may not participate in loading of the content carried on the control.

Delay loading is shown in FIG. 14B. For content of ① to ⑧, refer to the foregoing text description in FIG. 10A. Details are not described herein again.

As shown in ⑨, content carried on a control in a non-extended area of the extended bitmap (content carried on a control on the 1^{st} frame of interface of the animation) needs to be obtained before t2. As shown in ⑩, content carried on a control displayed on the 2^{nd} frame of interface of the animation in the extended area of the extended bitmap needs to be obtained before t3. As shown in ⑪, content carried on a control displayed on the 3^{rd} frame of interface of the animation in the extended area of the extended bitmap needs to be obtained before t4. Herein, ④, ⑥, and ⑧ respectively indicate that a display subsystem sends the 1^{st} frame of interface of the animation for display, the display subsystem sends the 2^{nd} frame of interface of the animation for display, and the display subsystem sends the 3^{rd} frame of interface of the animation for display.

With reference to content shown in FIG. 14A, if the control 1402, the control 1403, and/or the control 1404 are/is displayed on the 3^{rd} frame of interface of the animation, the application may request, at any moment before t3, the application server to obtain images obtained on the control 1402, the control 1403, and/or the control 1404.

Herein, t2, t3, and t4 are moments at which the application sequentially receives vertical synchronizing signals.

For an extended bitmap other than the first extended bitmap, for example, a second extended bitmap, before the second extended bitmap is generated, content carried on a control located in the second extended bitmap may be obtained in advance.

Optionally, in some implementations of this application, delay loading and/or pre-loading are/is performed on an object like a media file that needs to be obtained from the application server, for example, an image or a text.

According to the foregoing described interface generation method provided in embodiments of this application shown in FIG. 8 to FIG. 12B, in an animation process, the UI thread may determine, based on time and animation logic, whether a control is visible, to perform a further operation. For example, when a video view is invisible, playing of a multimedia data stream carried on the video view is paused.

For example, in FIG. 14A, the control 1401 is a video view. In the animation process, the UI thread of the application determines whether the control 1401 is visible. After determining that the control 1401 is invisible, the application may pause a multimedia data stream corresponding to the control 1401, for example, pause video playing.

The UI thread of the application may determine a location of the control 1401 on each frame of interface of the animation based on time and animation logic. For example, the animation is a downward sliding animation. The animation logic includes a downward sliding height of each frame of interface. In a process of generating an extended bitmap, the UI thread may determine the location of the control 1401 in a process of performing view traversal, so that the UI thread can determine the location of the control 1401 on each frame of interface, and fill the multimedia data stream in the location of the control 1401 on each frame of interface.

Similarly, in a case in which content carried on the image view is a dynamic image, each frame of image data of the dynamic image is filled in a location of the image view on each frame of interface.

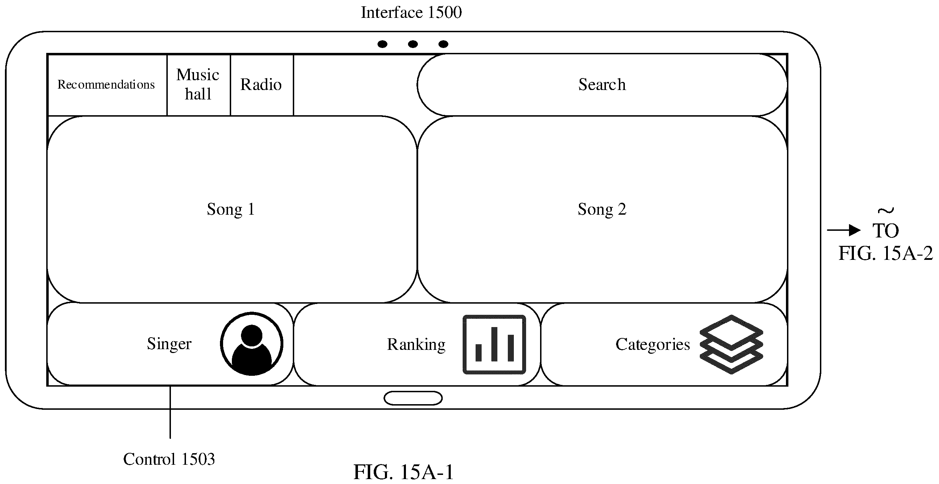

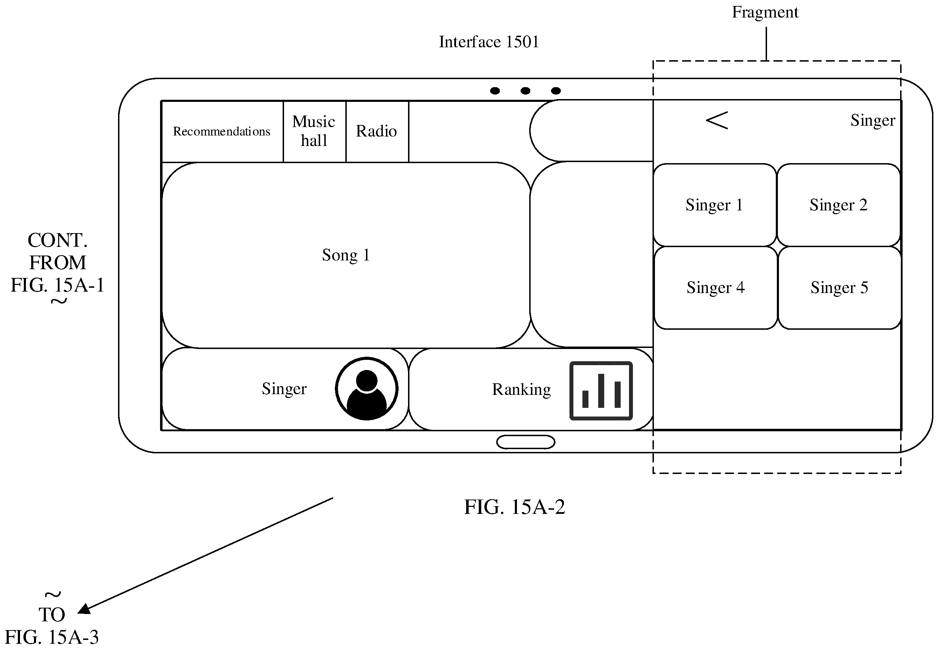

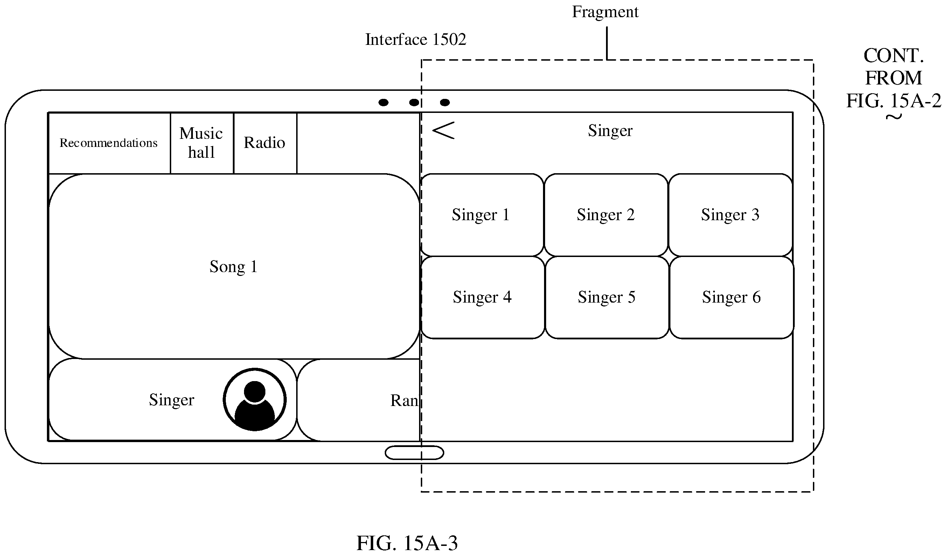

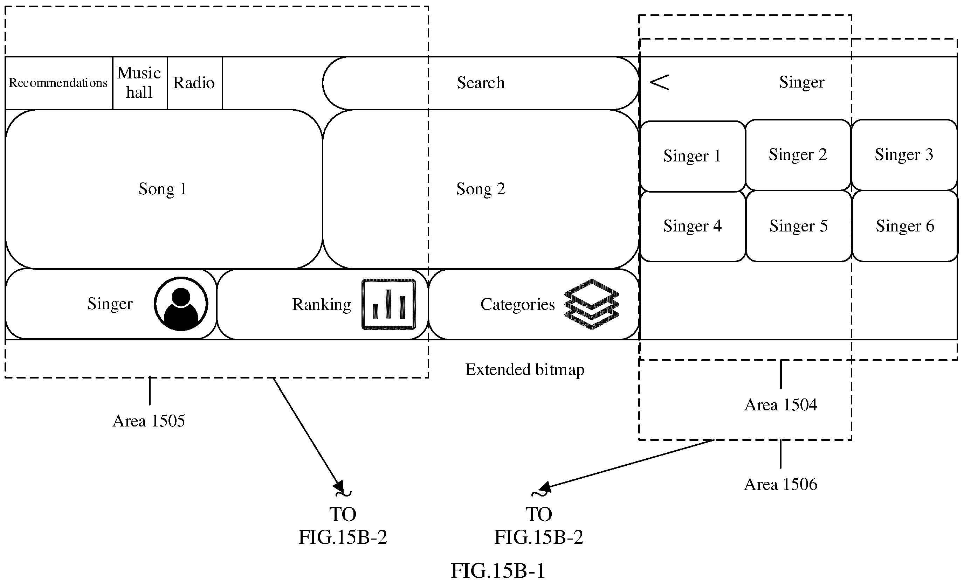

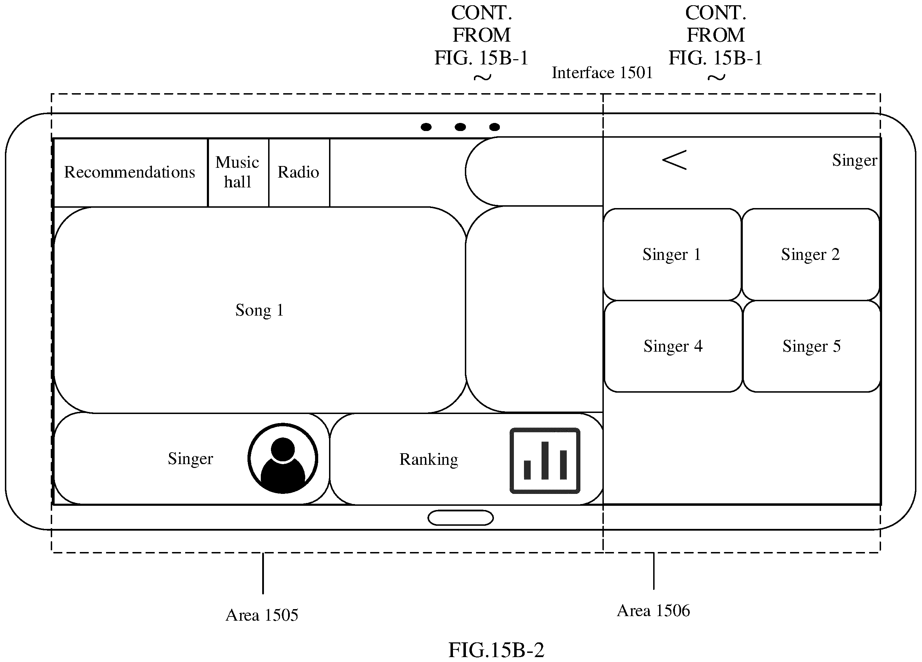

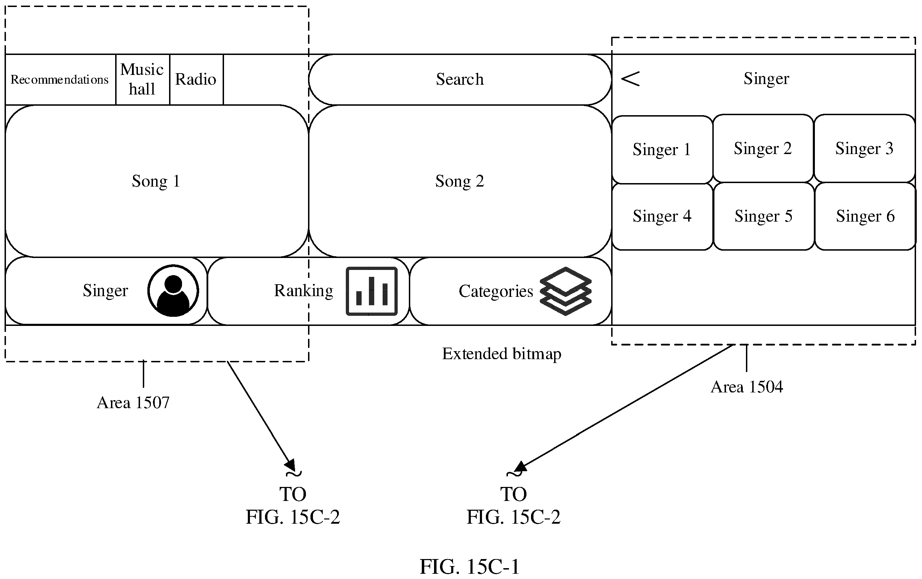

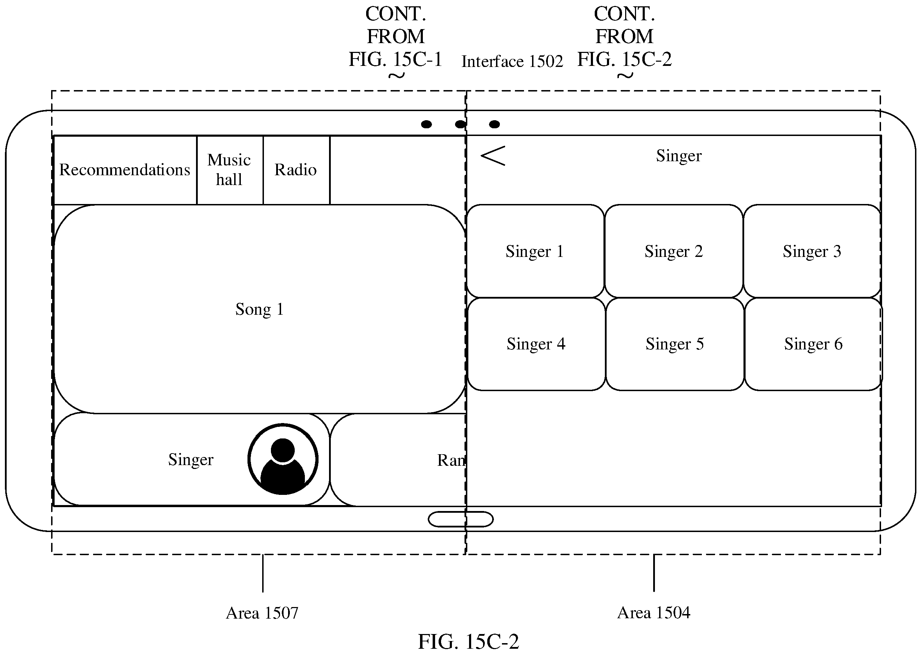

In addition to the foregoing sliding animation, in the foregoing described interface generation method provided in embodiments of this application shown in FIG. 8 to FIG. 12B, interface generation in a switching animation process may also be implemented, as shown in FIG. 15A-1 to FIG. 15C-2.

FIG. 15A-1 to FIG. 15C-2 are diagrams of another example of generating a plurality of frames of interfaces in an animation process based on an extended bitmap according to an embodiment of this application.

As shown in FIG. 15A-1 to FIG. 15A-3, the electronic device displays an interface of a music application, as shown on an interface 1500. The interface 1500 includes a control 1503. After an operation of tapping the control 1503 by the user is received, an interface displayed by the electronic device changes from the interface 1500 to an interface 1501, and then changes from the interface 1501 to an interface 1502.

On the interface 1501, a fragment (Fragment) is displayed in a floating manner on the interface, and the fragment is not completely displayed. On the interface 1502, the fragment is completely displayed, and is displayed on the interface in a floating manner. In other words, in a process in which the interface 1500 is changed to the interface 1501 and then to the interface 1502, a display size of the fragment gradually increases.

In the switching animation, the electronic device may generate an extended bitmap, as shown in FIG. 15B-1 and FIG. 15B-2. The extended bitmap includes an original bitmap and an area 1504, where the area 1504 is the extended area, and content displayed in the area 1504 is content displayed in the fragment.

The area 1504 includes an area 1506, the original bitmap includes an area 1505, and the area 1505 and the area 1506 form the interface 1501. In other words, the surface flinger and/or the hardware composer may perform cropping on the extended bitmap to obtain the area 1505 and the area 1506 separately, and then perform splicing on the area 1505 and the area 1506 to obtain a bitmap corresponding to the interface 1501.

The surface flinger and/or the hardware composer may perform cropping on the extended bitmap to obtain an area 1507 and the area 1504 separately, and then perform splicing on the area 1507 and the area 1504 to obtain a bitmap corresponding to the interface 1502.

Similarly, it may alternatively be considered that in the switching animation shown in FIG. 15A-1 to FIG. 15A-3, the interface 1500 is a static area, and the fragment is a dynamic area. A plurality of frames of interfaces in the switching animation are generated according to the foregoing interface generation method.

Optionally, in some implementations of this application, content carried on a control in the fragment may be requested from the application server after it is determined that the extended bitmap needs to be generated.

Finally, a software architecture and a hardware structure of an electronic device provided in embodiments of this application are described.

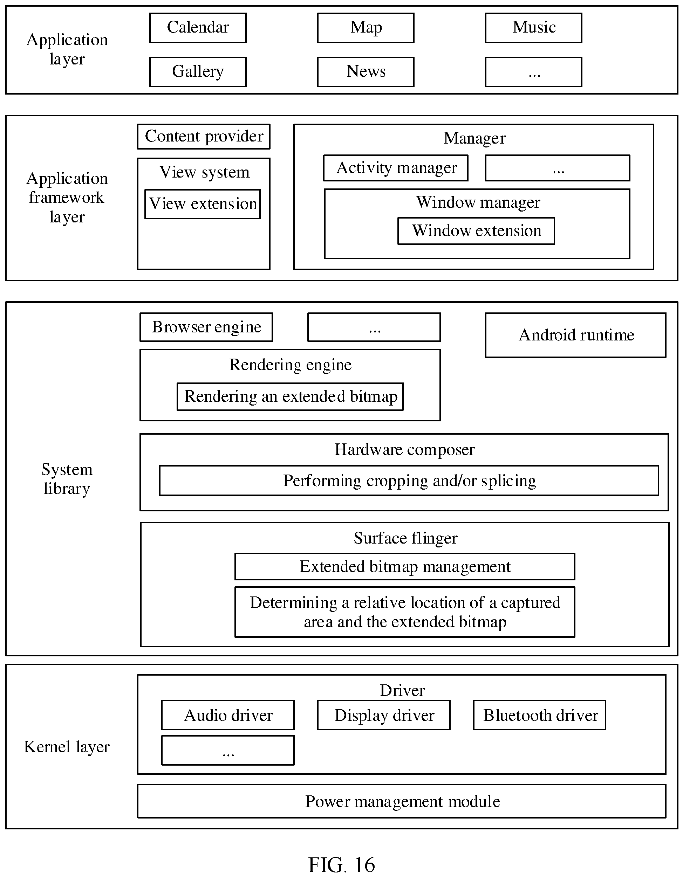

FIG. 16 is a diagram of an example of a software structure of an electronic device according to an embodiment of this application.

A software system of the electronic device may use a layered architecture, an event-driven architecture, a microkernel architecture, a micro service architecture, or a cloud architecture. In this embodiment of the present invention, an Android system of the layered architecture is used as an example to illustrate the software structure of the electronic device.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 16, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 16, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like.

The content provider is configured to: store and obtain data, and enable the data to be accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messages may include a view for displaying a text and a view for displaying an image.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message, which may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application running on a background, or may be a notification that appears on the screen in a form of dialog window. For example, text information is prompted in the status bar, an alert tone is played, the electronic device vibrates, or the indicator light blinks.

Optionally, in some implementations of this application, the view system may be responsible for performing view extension. The view extension is a manner to implement an extended area. In other words, view extension provides a solid data basis for implementing an extended bitmap. For example, for a list view, a preview property or parameter may be added, to enable the extended area.

Optionally, in some implementations of this application, when an animation is sliding, the view system may be further responsible for sliding detection of the list view and pipeline (pipeline) drawing management. The sliding detection of the list view includes whether sliding stops, determining of a sliding distance, and the like. The pipeline drawing management includes a generation occasion of the extended bitmap, a size of the extended area of the extended bitmap, a direction of the extended area, and the like.

Optionally, in some implementations of this application, the window manager may be responsible for performing window extension. The window extension is a manner to implement an extended area. In other words, window extension provides a solid data basis for implementing an extended bitmap. For example, after the window manager performs window extension on a window of the application, the window of the application changes from an original window to an extended window, and content displayed in the extended window includes the extended bitmap.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a browser engine (webkit), a rendering engine, a surface flinger, a hardware composer, a media library (Media Library), an image processing library (for example, OpenGL ES), and a rendering engine (for example, Skia library).

The media library supports playback and recording of a plurality of commonly used audio and video formats, static image files, and the like. The media library may support a plurality of audio and video encoding formats such as MPEG-4, H.264, MP3, AAC, AMR, JPG, and PNG.

The image processing library is configured to implement three-dimensional graphics drawing, image rendering, and the like.

The rendering engine is a drawing engine for 2D drawing.

Optionally, in some implementations of this application, the rendering engine is responsible for rendering the extended bitmap. To be specific, the rendering engine may receive a render tree, and based on the render tree, call a GPU to perform rendering to generate the extended bitmap.

Optionally, in some implementations of this application, the surface flinger is configured to manage the extended bitmap, for example, a storage location of the extended bitmap and a destruction occasion of the extended bitmap. The surface flinger is further configured to determine a relative location of a captured area and the extended bitmap. In a sliding animation, the surface flinger may determine the relative location between the captured area and the extended bitmap based on a sliding distance (sliding offset).

Optionally, in some implementations of this application, the hardware composer may perform cropping and/or splicing on one or more bitmaps.

The kernel layer is a layer between hardware and software. The kernel layer includes a display driver, a camera driver, an audio driver, and a sensor driver.

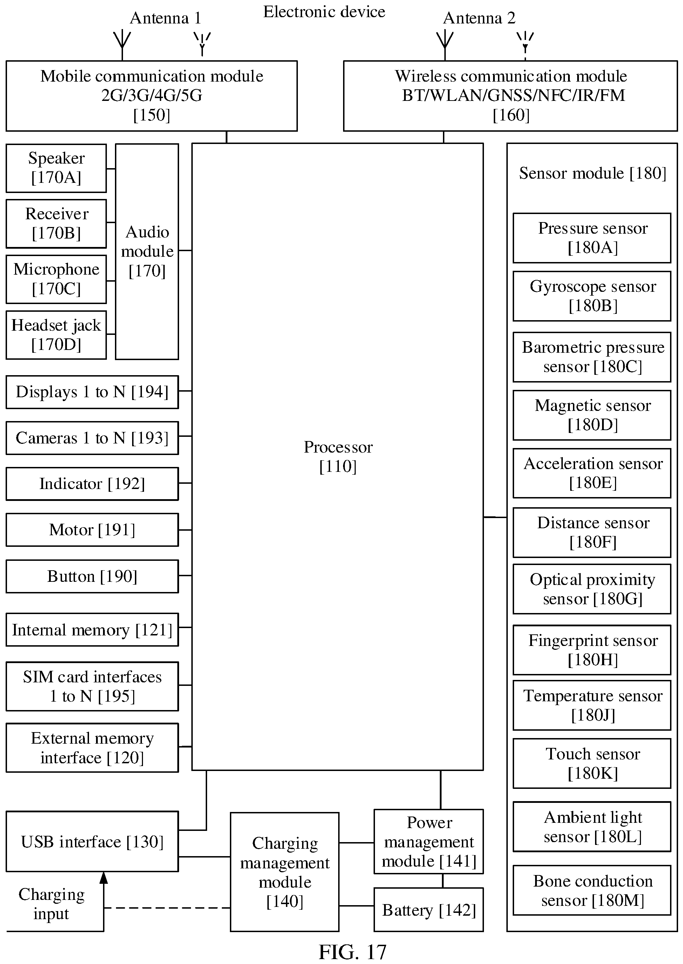

FIG. 17 is a diagram of an example of a hardware structure of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in embodiments of the present invention does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may also be disposed in the processor 110, and is configured to store instructions and data. In some embodiments, the memory in the processor 110 is a cache memory. The memory may store the instructions or the data that have/has been used or cyclically used by the processor 110. If the processor 110 needs to use the instructions or the data again, the processor may directly call the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be configured to transmit data between the electronic device and the peripheral device, or may be configured to connect to a headset for playing an audio through the headset. The interface may be further configured to connect to another electronic device like an AR device.

It may be understood that an interface connection relationship between the modules illustrated in embodiments of the present invention is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some wireless charging embodiments, the charging management module 140 may receive a wireless charging input through a wireless charging coil of the electronic device. The charging management module 140 may further supply power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device may implement a display function by using the GPU, the display 194, the application processor, and the like. The GPU is a microprocessor for image processing, and connects the display 194 and the application processor. The GPU is configured to: perform mathematical and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during image shooting, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transformation on frequency energy.

The video codec is configured to compress or decompress a digital video. The electronic device may support one or more types of video codecs. In this way, the electronic device may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning. Applications such as intelligent cognition of the electronic device, for example, image recognition, facial recognition, speech recognition, and text understanding, may be implemented through the NPU.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multi media card (embedded multi media Card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by using the processor 110.

The external memory interface 120 may be configured to connect to an external non-volatile memory, to expand a storage capability of the electronic device. The external non-volatile memory communicates with the processor 110 through the external memory interface 120, to implement a data storage function. For example, files such as music and videos are stored in the external non-volatile memory.

The electronic device may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may listen to music or answer a hands-free call by using the speaker 170A.

The receiver 170B, also referred to as an "earpiece", is configured to convert an audio electrical signal into a sound signal. When a call is answered or a speech message is received by using the electronic device, the receiver 170B may be put close to a human ear to listen to a speech.

The microphone 170C, also referred to as a "mike" or a "mic", is configured to convert a sound signal into an electrical signal. When making a call or sending a speech message, the user may place the mouth of the user near the microphone 170C to make a sound, to input a sound signal to the microphone 170C. At least one microphone 170C may be disposed in the electronic device. In some other embodiments, two microphones 170C may be disposed in the electronic device, to collect a sound signal and implement a noise reduction function. In some other embodiments, three, four, or more microphones 170C may alternatively be disposed in the electronic device, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force acts on the pressure sensor 180A, capacitance between electrodes changes. The electronic device determines pressure intensity based on a change of the capacitance. When a touch operation is performed on the display 194, the electronic device detects intensity of the touch operation by using the pressure sensor 180A. The electronic device may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Message application icon, an instruction for creating a new message is performed.

The gyroscope sensor 180B may be configured to determine a motion posture of the electronic device. In some embodiments, an angular velocity of the electronic device around three axes (axes x, y, and z) may be determined by using the gyroscope sensor 180B. The gyroscope sensor 180B may be configured to implement image shooting stabilization during image shooting. For example, when the shutter is pressed, the gyroscope sensor 180B detects an angle at which the electronic device jitters, calculates, based on the angle, a distance for which a lens module needs to compensate, and allows the lens to cancel the jitter of the electronic device through reverse motion, to implement stabilization. The gyroscope sensor 180B may also be used in a navigation scenario and a somatic game scenario.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall effect sensor. The electronic device may detect opening and closing of a flip cover by using the magnetic sensor 180D. In some embodiments, when the electronic device is a flip phone, the electronic device can detect opening and closing of a flip cover by using the magnetic sensor 180D. Further, a feature like automatic unlocking of the flip cover is set based on a detected opening or closing state of the flip cover.

The acceleration sensor 180E may detect an acceleration of the electronic device in various directions (usually on three axes). When the electronic device is static, a magnitude and a direction of gravity may be detected. The acceleration sensor 180E may be further configured to identify a posture of the electronic device, and is used in switching between a landscape mode and a portrait mode, a pedometer, or another application.

The distance sensor 180F is configured to measure a distance. The electronic device may measure a distance by using infrared light or a laser. In some embodiments, in an image shooting scene, the electronic device may measure a distance by using the distance sensor 180F, to implement quick focusing.

The optical proximity sensor 180G may include, for example, a light-emitting diode (LED) and an optical detector, for example, a photodiode. The light emitting diode may be an infrared light-emitting diode. The electronic device emits infrared light through the light-emitting diode. The electronic device detects infrared reflected light from a nearby object by using the photodiode. When sufficient reflected light is detected, it may be determined that there is an object near the electronic device. When insufficient reflected light is detected, the electronic device may determine that there is no object near the electronic device. The electronic device may detect, by using the optical proximity sensor 180G, that the user holds the electronic device close to an ear for a call, to automatically turn off a display for power saving. The optical proximity sensor 180G may also be used in a leather case mode or a pocket mode to automatically perform screen unlocking or locking.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G, to detect whether the electronic device is in a pocket, to avoid an accidental touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a threshold, the electronic device lowers performance of a processor nearby the temperature sensor 180J, to reduce power consumption for thermal protection. In some other embodiments, when the temperature is less than another threshold, the electronic device heats the battery 142 to prevent the wearable device from being shut down abnormally due to a low temperature. In some other embodiments, when the temperature is lower than still another threshold, the electronic device boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may alternatively be disposed in the headset, to combine into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device may receive a button input, and generate a button signal input related to a user setting and function control of the electronic device.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 may further be compatible with an external memory card. The electronic device interacts with a network through the SIM card, to implement functions such as calling and data communication. In some embodiments, the electronic device uses eSIM, namely, an embedded SIM card. The eSIM card may be embedded into the electronic device, and cannot be separated from the electronic device.

According to the context, the term "when" used in the foregoing embodiments may be interpreted as a meaning of "if", "after", "in response to determining", or "in response to detecting". Similarly, according to the context, the phrase "when it is determined that..." or "if it (a stated condition or event) is detected" may be interpreted as a meaning of "if it is determined that...", "in response to determining...", "when it (a stated condition or event) is detected", or "in response to detecting (a stated condition or event)".

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in the computer-readable storage medium. When the program is run, the processes of the methods in the embodiments are performed. The foregoing storage medium includes any medium that can store program code, such as a ROM, a random access memory RAM, a magnetic disk, or an optical disc.

## Claims

1. An interface generation method, applied to an electronic device, wherein a first application runs on the electronic device, and the method comprises:
generating, by the electronic device, a first bitmap by using the first application after receiving a first operation, wherein the first bitmap comprises display data corresponding to at least two frames of interfaces of the first application in a first animation, and the first operation is used to trigger the electronic device to display the first animation by using the first application;
obtaining, by the electronic device, the at least two frames of interfaces of the first animation through capturing performed on the first bitmap; and
displaying, by the electronic device, the first animation.

2. The method according to claim 1, wherein the first animation is a sliding animation; and
the generating, by the electronic device, a first bitmap by using the first application after receiving a first operation specifically comprises:
after the electronic device receives the first operation and determines that the first animation is the sliding animation, modifying, by the electronic device, a size of a window of the first application, so that the size of the window of the first application changes from a first size to a second size, wherein the second size is greater than the first size; and
generating, by the application, the first bitmap based on the second size.

3. The method according to claim 2, wherein a view related to the first animation comprises a list view;
when the size of the window of the first application is the first size, the list view comprises a first list entry, and when the size of the window of the first application is the second size, the list view comprises the first list entry and a second list entry; and
on an M^{th} frame of interface of the first animation, the first list entry is displayed and the second list entry is not displayed, and on an N^{th} frame of interface of the first animation effect, the second list entry is displayed and the first list entry is not displayed, wherein M is not equal to N, and the M^{th} frame of interface and the N^{th} frame of interface belong to the at least two frames of interfaces.

4. The method according to claim 1, wherein the first animation is a sliding animation; and
the generating, by the electronic device, a first bitmap by using the first application after receiving a first operation specifically comprises:
modifying, by the application, a size of a first view, wherein the first view is a view whose display content in the first animation changes, and a modified size of the first view is greater than the unmodified size of the first view; and
generating, by the application, the first bitmap based on the modified first view.

5. The method according to claim 4, wherein the first view is a list view;
before the first view is modified, the first view comprises a first list entry, and after the first view is modified, the first view comprises the first list entry and a second list entry; and
on an M^{th} frame of interface of the first animation effect, the first list entry is displayed and the second list entry is not displayed, and on an N^{th} frame of interface of the first animation effect, the second list entry is displayed and the first list entry is not displayed, wherein M is not equal to N, and the M^{th} frame of interface and the N^{th} frame of interface belong to the at least two frames of interfaces.

6. The method according to claim 1, wherein the generating a first bitmap by using the application specifically comprises:
extending, by the application, a first view, wherein the first view is a view whose display content changes within duration of the first animation effect, and one or more sub-views are added to the extended first view; and
generating, by the application, the first bitmap based on the extended first view.

7. The method according to any one of claims 1 to 6, wherein
before the first bitmap is generated by using the first application, and after the electronic device receives the first operation, the method further comprises: determining, by the electronic device, a dynamic area of an interface of the first animation by using the first application, wherein
the first bitmap comprises display data corresponding to a dynamic area of the at least two frames of interfaces of the first animation; and
the obtaining, by the electronic device, the at least two frames of interfaces of the first animation through capturing performed on the first bitmap specifically comprises: capturing, by the electronic device, a second bitmap from the first bitmap, wherein the second bitmap comprises display data of the dynamic area on a first interface, and the first interface belongs to the at least two frames of interfaces of the first animation; and generating, by the electronic device, the first interface based on the second bitmap.

8. The method according to claim 7, wherein
the method further comprises: generating, by the electronic device, a third bitmap by using the first application, wherein the third bitmap is a static area in the first animation, and the static area is an area in which display content on an interface of the first application in the first animation does not change; and
the generating, by the electronic device, the first interface based on the second bitmap specifically comprises: generating, by the electronic device, the first interface based on the second bitmap and the third bitmap.

9. The method according to claim 7, wherein the first bitmap further comprises display data of a static area in the first animation, and the static area is an area in which display content on an interface of the first application in the first animation does not change.

10. The method according to any one of claims 1 to 6, wherein the obtaining, by the electronic device, the at least two frames of interfaces of the first animation through capturing performed on the first bitmap specifically comprises:
in a process of generating an I^{th} frame of interface of the first animation, capturing, by the electronic device, a second bitmap from the first bitmap, wherein the second bitmap is display data of a first area in the first bitmap, the I^{th} frame of interface comprises display content corresponding to the second bitmap, I is an integer greater than or equal to 1, and the I^{th} frame of interface belongs to the at least two frames of interfaces of the first animation; and
in a process of generating a J^{th} frame of interface of the first animation, capturing, by the electronic device, a third bitmap from the first bitmap, wherein the third bitmap is display data of a second area in the first bitmap, the J^{th} frame of interface comprises display content corresponding to the third bitmap, J is an integer greater than or equal to 1, J is not equal to I, the J^{th} frame of interface belongs to the at least two frames of interfaces of the first animation, and the second area is different from the first area.

11. The method according to claim 10, wherein the method further comprises:
in the process of generating the J^{th} frame of interface of the first animation, capturing, by the electronic device, a fourth bitmap from the first bitmap, wherein the fourth bitmap is display data of a third area in the first bitmap;
splicing, by the electronic device, the fourth bitmap and the third bitmap to generate a fifth bitmap, wherein the fifth bitmap corresponds to the J^{th} frame of interface; and
displaying, by the electronic device, the J^{th} frame of interface of the first animation based on the fifth bitmap.

12. The method according to claim 10, wherein after the first bitmap is generated by using the first application, and before the electronic device captures display content in the first area from the first bitmap to obtain the second bitmap, the method further comprises:
obtaining, by the electronic device by using an application server, content carried on a view in the first area in the first bitmap, wherein the content carried on the view is a text, an image, and/or a video.

13. The method according to any one of claims 1 to 12, wherein the first bitmap is used to generate a 1^{st} frame of interface to a K^{th} frame of interface of the first animation, and K is an integer greater than 1; and
after the application generates the first bitmap, and before the electronic device displays the K^{th} frame of interface, the method further comprises: generating, by the application, a sixth bitmap, wherein the sixth bitmap is used to generate a (K+1)^{th} frame of interface to an L^{th} frame of interface of the first animation, and L is an integer greater than (K+1).

14. The method according to any one of claims 1 to 12, wherein the first operation is a sliding operation.

15. An electronic device, wherein the electronic device comprises one or more processors and a memory; and
the memory is coupled to the one or more processors, the memory is configured to store computer program code, the computer program code comprises computer instructions, and the one or more processors call the computer instructions to enable the electronic device to perform the method according to any one of claims 1 to 14.

16. A chip system, wherein the chip system is used in an electronic device, the chip system comprises one or more processors, and the processor is configured to call computer instructions to enable the electronic device to perform the method according to any one of claims 1 to 14.

17. A computer-readable storage medium, comprising instructions, wherein when the instructions are run on an electronic device, the electronic device is enabled to perform the method according to any one of claims 1 to 14.

18. A computer program product comprising instructions, wherein when the computer program product runs on an electronic device, the electronic device is enabled to perform the method according to any one of claims 1 to 14.
